# EUROPÄISCHE PATENTSCHRIFT

(11) **EP 2 129 704 B1**
(45) Veröffentlichungstag und Bekanntmachung des Hinweises auf die Patenterteilung: **06.01.2016**
(21) Anmeldenummer: 08718032.9
(22) Anmeldetag: 19.03.2008
(51) Int. Cl.: C08G 77/455, C08G 77/458, C09D 183/10, C08G 18/28, C08G 69/42

(54) **NEUE POLYAMID-POLYSILOXAN-VERBINDUNGEN**
NOVEL POLYAMIDE-POLYSILOXANE COMPOUNDS
NOUVEAUX COMPOSÉS DE POLYAMIDE-POLYSILOXANE

(30) Priorität: 19.03.2007 DE 102007012908
(43) Veröffentlichungstag der Anmeldung: 09.12.2009
(73) Patentinhaber: Momentive Performance Materials GmbH, 51368 Leverkusen (DE)
(72) Erfinder: LANGE, Horst, 44879 Bochum (DE); WAGNER, Roland, 53227 Bonn (DE); SOCKEL, Karl-Heinz, 51373 Leverkusen (DE); HOFFMUELLER, Gunnar, 51373 Leverkusen (DE)
(74) Vertreter: Gille Hrabal
(86) Internationale Anmeldenummer: PCT/EP2008/053311
(87) Internationale Veröffentlichungsnummer: WO 2008/113831

(56) Entgegenhaltungen:
- EP-A- 1 309 648
- DE-A1- 10 260 299
- US-A1- 2005 020 769
- US-A1- 2006 036 055

## Beschreibung

Die Erfindung betrifft neue Polyamid-Polysiloxan-Verbindungen, Verfahren zu ihrer Herstellung, ihre Verwendung, Vorstufen zu ihrer Herstellung sowie reaktive Zusammensetzungen, die die Vorstufen enthalten.

Es ist umfänglich bekannt, kohlenwasserstoffbasierte Diisocyanate mit kohlenwasserstoffbasierten Diaminen bzw. kohlenwasserstoffbasierten Diolen zu Polyharnstoffen bzw. Polyurethanen reagieren zu lassen. Die Einarbeitung von höherfunktionellen Isocyanaten, Aminen oder Alkohlen führt zu vernetzten Produkten.

Ein wesentlicher Gesichtspunkt bei der Herstellung derartiger Polymerer ist die Bereitstellung von lagerstabilen, gut handhabbaren Präpolymeren. Dies gelingt bevorzugt durch temporäre Deaktivierung isocyanathaltiger Präpolymerer mit geeigneten Blockierungsmitteln, wie Lactamen, Oximen, Pyrazolen, sterisch gehinderten Aminen oder Malonsäureestern (C. Gürtler, M. Homann, M. Mager, M. Schelhaas, T. Stingl, Farbe & Lack, 110.Jahrgang, 12/2004, 34-37). Nachteil dieser Blockierungsstrategien ist, dass unter den Bedingungen der Bildung der finalen Polyharnstoffe oder Polyurethane flüchtige Spaltprodukte, den Blockierungsmitteln entstammend, freigesetzt werden.

Zur Überwindung dieses Nachteils sind Blockierungsmittel auf Basis von cyclischen Ketonen entwickelt worden, die in das finale Polymer eingebunden werden. Dabei werden Abspaltungsprodukte nicht freigesetzt.

So beschreibt US 6 827 875 die Umsetzung von cyclischen Ketonen, bevorzugt Cyclopentanon-2-carboxyethylester (CPEE) mit Diisocyanaten zu reaktiven Vorkondensaten, welche mit Hydroxylgruppen oder Aminogruppen enthaltenden Kohlenwasserstoffen zu den endültigen Polymeren unter Ausbildung von Ester- oder Amidbindungen reagieren. Die US 2004/0030086 offenbart als Polyhydroxyverbindungen für Lackanwendungen Polyesterpolyole, Polycarbonatpolyole und Polyacrylatpolyole. Die US 2004/0147704 schlägt für bei Raumtemperatur härtende Systeme speziell die Verwendung von Isocyanat-modifizierten Polyethern in Kombination mit Aminogruppen enthaltenden Kohlenwasserstoffen vor.Gemäß US 2006/0069255 kann durch Verwendung von Aminoalkoholen in der letzten Polymerisationsstufe die Reaktivität des Systems gesteuert werden. In US 2004/0133035 wird die Verwendung von Härterpulvern zur Herstellung lösungsmittelfreier Lacke behandelt. Gemäß US 2004/0132909 kann man den von Abspaltprodukten freien Präpolymeren Acrylatmonomere zusetzen, die dann strahlenvernetzbar sind.

Es ist gemeinsamer Nachteil der genannten Vorschläge, dass sie keine Hinweise auf die Einführung der gewünschten Polyorganosiloxansegmente liefern.

Quaternäre Ammoniumstrukturen enthaltende Siloxanblockcopolymere sind umfänglich bekannt. Es kann sich dabei einerseits um Diblockcopolymere von Typ Siloxan mit quaternären Ammoniumeinheiten handeln (DE 33 40 708, EP 282720, US 6 240 929, US 6 730 766). Andererseits sind Triblockcopolymere entwickelt worden, die auf der Kombination Siloxan, quaternäre Ammoniumeinheit und Polyetherblock beruhen (WO 02/10256, WO 02/10257, WO 02/10259, WO 2004 / 090007, WO 03/078504, WO 2004/041912, WO 2004/042136).

In der GB 1128642 wird die Umsetzung von amino- oder hydroxyterminierten Siloxanen mit Diisocyanaten beschrieben, wobei gleichzeitig oder nachfolgend ionische Gruppen, z.B. quaternäre Ammoniumgruppen, eingeführt werden können. Die Umsetzung von amino- oder hydroxyterminierten Siloxanen mit Diisocyanaten führt zu Isocyanat-terminierten Zwischenstufen, welche dann beispielsweise mit primären-tertiären Di- oder Triaminen reagieren, woraufhin die tertiäre Aminogruppe quaterniert wird. Es ist möglich, die Isocyanat-terminierten Zwischenstufen mit Oligoethylenglykolen als hydrophilen Kettenverlängerern umzusetzen, was jedoch zu einem Verbrauch von Isocyanatgruppen führt, die dann nicht mehr für die Reaktion mit primär-tertiären Diaminen zur Verfügung stehen. In der Konsequenz sinkt die Menge an einführbaren quaternären Ammoniumgruppen. Nachteil dieser Lösung ist somit, dass eine flexible, weite Grenzen umfassende Anpassung der Struktur an die konkreten Produktanforderungen nicht erfolgen kann.

Es ist weiterhin bekannt, mit Aminogruppen terminierte Siloxane mit kohlenwasserstoffbasierten Diisocyanaten zu Harnstoffgruppen enthaltenden Diblockcopolymeren umzusetzen (US 2006/036055 und Silicone, Chemie und Technologie, Vulkan Verlag Essen 1989, S.94-96). Analoge Urethanderivate sind ebenfalls beschrieben (US 2004/087752).

Es ist ebenfalls Stand der Technik, OH-terminierte Polyether, Polyester, Polyurethane mit Isocyanatosilanen umzusetzen, die unter Anwendungsbedingungen in Gegenwart von Feuchtigkeit zu Siloxannetzwerken kondensieren (DE 103 28 844, DE 103 30 288, US 2004/087752).

Diesen auf die Einführung von Siloxanstrukturen in Blockcopolymere abzielenden Vorschlägen haften zwei wesentliche Nachteile an. Entweder müssen vom Endanwender bereits hochmolekulare Materialien mit entsprechenden Eigenschaften wie hohen Viskositäten eingesetzt werden, was eine entsprechende Maschinentechnik voraussetzt. Oder man setzt Materialien mit Alkoxysilangruppierungen ein, wobei die Vor-Ort-Bildung der Polymeren an das Vorhandensein von Wasser gebunden ist, was in vielen Fällen unerwünscht ist und nur schwierig reproduzierbar gestaltet werden kann. Die entstehenden rigiden T-Siloxannetzwerke (T=R-SiO_{3/2}) sind ungeeignet zur Einstellung eines definierten Siloxancharakters der finalen Polymeren. Die DE 10260299 A1 betrifft blockierte Polyurethan-Prepolymere, ein Verfahren zu deren Herstellung und daraus hergestellte raumtemperaturhärtende Reaktivsysteme und deren Verwendung. Die US 20050020769 A1 betrifft Pflege- und/oder Behandlungs- und/oder Make-up-Zusammensetzungen die eine flüssige Fettphase enthalten, die mit einem Silicon-Polyamid-Polymer strukturiert ist.

Es war somit Aufgabe der Erfindung, Blockcopolymere unter Beteiligung von siloxanhaltigen Segmenten zur Verfügung zu stellen, die aus lagerstabilen Vorstufen im Anwendungsfall gezielt zu den gewünschten Polymeren reagieren können.

Eine weitere Aufgabe der Erfindung war es, quaternäre Ammoniumgruppen enthaltende Siloxanblockcopolymere zur Verfügung zu stellen, die einerseits in weiten Grenzen eine Anpassung der Struktur an die konkreten Produktanforderungen erlauben und bei denen andererseits unter dem Einfluß von Donor-Akzeptor Wechselwirkungen durch Amid-, Harnstoff- und Urethangruppen Einfluß auf wesentliche Produkteigenschaften genommen werden kann.

Die vorliegende Erfindung stellt neue Polyamid-Polysiloxan-Verbindungen zur Verfügung, die aus stabilen Vorstufen gezielt im Anwendungsfall zu den gewünschten Polyamid-Polysiloxan-Verbindungen reagieren können. Die neuen Polyamid-Polysiloxan-Verbindungen lassen sich einfach, sicher und gezielt herstellen und verfügen über neue interessante Eigenschaften.

Die Erfindung betrifft neue Polyamid-Polysiloxan-Verbindungen, enthaltend Wiederholungseinheiten der Formel (3): 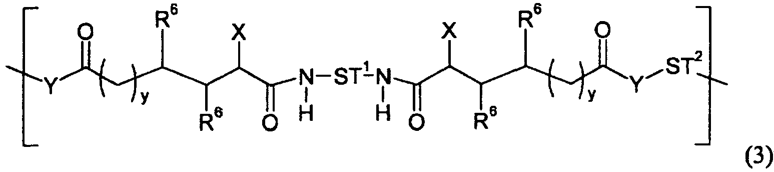 worin
X eine elektronen-ziehende Gruppe ist,
die Reste R⁶ gleich oder verschieden sein können und ausgewählt werden aus Wasserstoff und geradkettigen, cyclischen oder verzweigten, gesättigten, ungesättigten oder aromatischen Kohlenwasserstoffresten mit bis zu 40 Kohlenstoffatomen, die eine oder mehrere Gruppen ausgewählt aus -O-, -C(O)-, -NH- und -NR³- enthalten kann, worin
R³ ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)- und -NH- enthalten kann, und,
wobei die Reste R⁶ vorzugsweise Wasserstoff sind,
ST¹ ein zwei- bis vierwertiger, geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O)-, NH-, -NR³- und einer Polysiloxaneinheit mit 2 bis 1000 Siliciumatomen enthalten kann, worin R³ wie oben definiert ist,
y von 0 bis 5 ist, bevorzugt 1 ist,
Y ausgewählt wird aus -O-, -S- und -NR²-, worin
R² Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, -NH- und NR³- enthalten kann, worin R³ wie oben definiert ist,
ST² ein geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O)-, NH-, -NR³-, 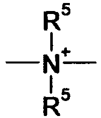 und einer Polysiloxaneinheit mit 2 bis 1000 Silicium-atomen enthalten kann, worin
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NH- enthalten kann, oder R⁵ ein zweiwertiger Rest ist, der cyclische Strukturen innerhalb des Restes ST² ausbildet, oder Y Stickstoff ist und zusammen mit SI² eine heterocyclische Struktur bildet, mit der Maßgabe, dass wenigstens einer der Reste ST¹ und/oder ST² einen Polysiloxanrest umfasst,
oder Säureadditionsverbindungen davon.

Der Begriff Säureadditionsverbindungen meint erfindungsgemäß insbesondere salzartige Verbindungen, die durch Protonierung von basischen Gruppen im Molekül, wie insbesondere gegebenenfalls vorhandenen Aminogruppen, beispielsweise durch Umsetzung mit anorganischen oder organischen Säuren erhalten werden.

Die Polyamid-Polysiloxan-Verbindung der Erfindung können linear oder verzweigt aufgebaut sein.

Das in den erfindungsgemäßen Polyamid-Polysiloxan-Verbindungen obligatorisch vorliegende Polysiloxan-Strukturelement weist bevorzugt die Formel (2) auf: 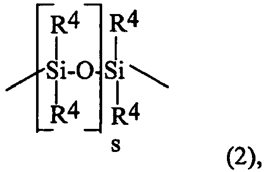 worin
R⁴ ein geradkettiger, cyclischer oder verzweigter, gesättigter, ungesättigter oder aromatischer Kohlenwasserstoffrest mit bis zu 20 Kohlenstofffatomen ist, und
s =1 bis 999 bevorzugt 1 bis 199, bevorzugter 1 bis 99,
wobei mindestens eine der Gruppen ST¹, ST² oder ST⁴ den Polyorganosiloxanrest der Formel (2) enthält.

Die erfindungsgemäßen Polyamid-Polysiloxan-Verbindungen im Mittel mindestens zwei, bevorzugt mindestens drei Polysiloxan-Strukturelemente der Formel (2) auf. Die erfindungsgemäßen Polyamid-Polysiloxan-Verbindungen weisen mindestens eine, bevorzugter mindestens zwei, noch bevorzugter mindestens drei Wiederholungseinheiten der Formel (3) auf: 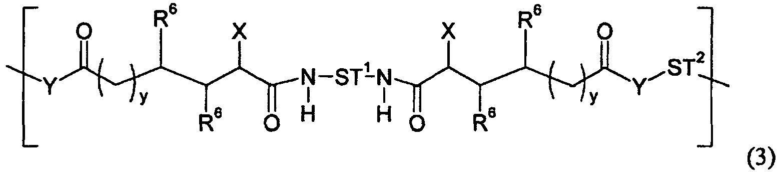 worin
X, R⁶, ST¹, und y wie oben definiert sind, und Y ausgewählt wird aus -O-, -S- und NR²-, worin R² Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, -NH- und NR³- enthalten kann, worin R³ wie oben definiert ist, und
ST² ein geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O)-, NH-,
-NR³-, 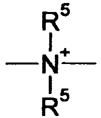 und einer Polysiloxaneinheit mit 2 bis 1000 Siliciumatomen enthalten kann, worin
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NH- enthalten kann, oder R⁵ ein zweiwertiger Rest ist, der cyclische Strukturen innerhalb des Restes ST² ausbildet,
oder Y Stickstoff ist und zusammen mit ST² eine heterocyclische Struktur bildet, welche insbesondere aus der Verwendung von cyclischen Diaminen, wie Piperazin resultiert, so dass -Y-ST²-Y- beispielsweise die folgende Struktur aufweist: 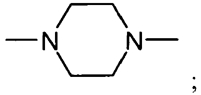 diese Variante schließt dabei auch den Fall ein, dass die heterocyclische Struktur nur einen Rest Y umfasst, so dass -Y-ST²-Y- beispielsweise die folgende Struktur, d.h. Piperidin-Derivate, aufweist:

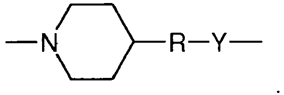

In den erfindungsgemäßen Polyamid-Polysiloxan-Verbindungen wird die elektronenanziehende Gruppe X bevorzugt ausgewählt aus -Z-R¹, worin R¹ ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen ausgewählt aus -O-, -C(O) -, -NH- und -NR³- enthalten kann, worin R³ wie oben defniert ist, und worin Z ausgewählt wird aus -C(O)-O-, -SO₂-, -NO₂, -P(O)(OR⁴)₂, -CN, -NC, und -C(O)-.

Besonders bevorzugt stellt X einen Ester-Rest der Formel -C(O)-O-R¹ dar, worin R¹ wie oben defniert ist, und am meisten bevorzugt wird X aus einer Carbonsäuremethylester- und einer Carbonsäureethylestergruppe ausgewählt.

In den erfindungsgemäßen Polyamid-Polysiloxan-Verbindungen stellt R⁶ bevorzugt Wasserstoff dar.

In einer bevorzugten Ausführungsform betrifft die Erfindung lineare Polyamid-Polysiloxan-Verbindungen, worin x = 1 ist. Derartige lineare lineare Polyamid-Polysiloxan-Verbindungen der Erfindung werden bevorzugt in solchen Anwendungen verwendet, in denen eine gute Mischbarkeit bzw. Dispergierbarkeit in wässrigen Medien benötigt wird. Derartige Anwendungen schließen insbesondere die Anwendung als Weichmacher für Fasern insbesondere in Waschmitteln, Textilpflegemittel, Textilausrüstungsmitteln, Modifizierungsmitteln für thermoplastische Kunststoffe ein.

In einer weiteren bevorzugten Ausführungsform betrifft die Erfindung verzweigte Polyamid-Polysiloxan-Verbindungen, worin x = 1 und x > 1 ist. Derartige verzweigte Strukturelemente aufweisenden Polyamid-Polysiloxan-Verbindungen der Erfindung werden insbesondere für solche Anwendungen benötigt, in denen duroplastische Beschichtungen oder Elastomere aus den Polyamid-Polysiloxan-Verbindungen der Erfindung hergestellt werden.

In einer weiteren Ausführungsform der erfindungsgemäßen Polyamid-Polysiloxan-Verbindung weisen diese Aminogruppen, protonierte Amingruppen und/oder quaternäre Ammoniumgruppen auf. Besonders bevorzugt ist die Anwesenheit quaternärer Ammoniumgruppen, welche insbesondere zur Einstellung hydrophiler oder substantiver Eigenschaften dient, wie sie insbesondere bei Anwendung in wässrigen Zusammensetzungen vorteilhaft sind.

Besonders bevorzugte Polyamid-Polysiloxan-Verbindungen der Erfindung weisen eine insbesondere aber auch mehrere Wiederholungseinheiten der folgenden Formeln auf: 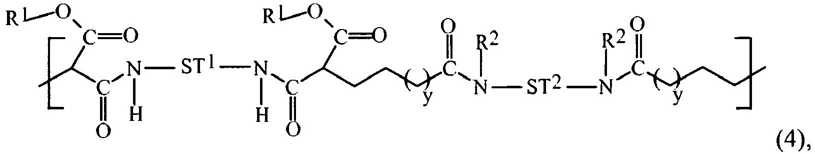 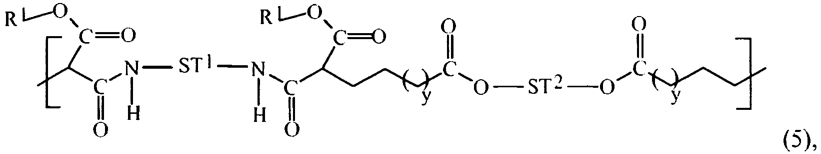 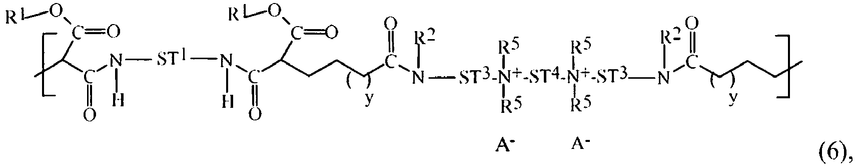 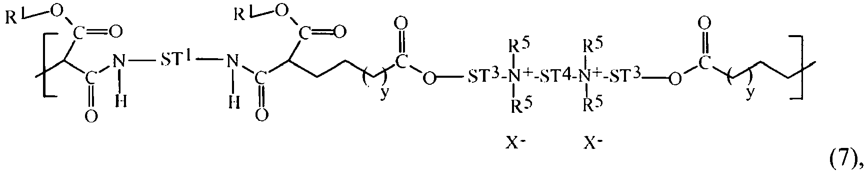 worin R¹, ST¹, ST², R², R⁵, y wie oben defniert sind,
ST³ ein geradkettiger, cyclischer oder verzweigter, gesättigter, ungesättigter oder aromatischer Kohlenwasserstoffrest mit 2 bis 100 Kohlenstoffatomen ist, der einen oder mehrere Gruppen ausgewählt aus -O-, -C(O)-, -NH-, -NR³- enthalten kann, und
ST⁴ ein geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O)-, -NH-, -NR³- und einer Polysiloxaneinheit mit 2 bis 1000 Siliciumatomen enthalten kann, und A⁻ ein anorganisches oder organisches Anion ist.

Bevorzugte Polyamid-Polysiloxan-Verbindung der Erfindung weisen eine oder mehrere oder alle der folgenden bevorzugten Definitionen auf:
ST¹ ist ein zweiwertiger geradkettiger, cyclischer oder verzweigter, mehrwertiger, gesättigter, ungesättigter oder aromatischer Kohlenwasserstoffrest mit bis zu 200 Kohlenstoffatomen, der eine oder mehrere Gruppen, ausgewählt aus -O-, -C(O)-, -NH-, -NR³- und einer Polysiloxaneinheit mit 2 bis 200 Siliciumatomen enthalten kann,
ST² ist ein zweiwertiger geradkettiger, cyclischer oder verzweigter, mehrwertiger, gesättigter, ungesättigter oder aromatischer Kohlenwasserstoffrest mit bis zu 200 Kohlenstoffatomen, der eine oder mehrere Gruppen, ausgewählt aus -O-, -C(O)-, -NH-, -NR³-, 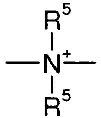 und einer Polysiloxaneinheit mit 2 bis 200 Siliciumatomen enthalten kann,
R² ist H oder ein geradkettiger, cyclischer oder verzweigter, gesättigter, ungesättigter oder aromatischer Kohlenwasserstoffrest mit bis zu 10 Kohlenstoffatomen, der eine oder mehrere Gruppen, ausgewählt aus-O-, -C(O)-, -NH- und -NR³- enthalten kann,
   y ist 0 bis 3,
ST⁴ ist ein zweiwertiger, geradkettiger, cyclischer oder verzweigter, mehrwertiger, gesättigter, ungesättigter oder aromatischer Kohlenwasserstoffrest mit bis zu 200 Kohlenstoffatomen, der eine oder mehrere Gruppen, ausgewählt aus -O-, -C(O)-, -NH-, -NR³- und einer Polyorganosiloxaneinheit mit 2 bis 200 Siliciumatomen enthalten kann,
   wobei mindestens eine der Gruppen ST¹, ST² oder ST⁴ den Polyorganosiloxanrest der Formel (2) enthält.
ST³ ist ein geradkettiger, cyclischer oder verzweigter, mehrwertiger, gesättigter, ungesättigter oder aromatischer Kohlenwasserstoffrest mit 2 bis 20 Kohlenstoffatomen, der einen oder mehrere Gruppen ausgewählt aus -O-, -C(O)-,-NH-, -NR³- enthalten kann,
R³ ist ein geradkettiger, cyclischer oder verzweigter, gesättigter, ungesättigter oder aromatischer Kohlenwasserstoffrest mit bis zu 10 Kohlenstoffatomen, der einen oder mehrere Gruppen ausgewählt aus -O-, -C(O)- und -NH- enthalten kann,
R⁴ ein geradkettiger, cyclischer oder verzweigter, gesättigter, ungesättigter oder aromatischer Kohlenwasserstoffrest mit bis zu 9 Kohlenstofffatomen ist,
R⁵ ist ein geradkettiger, cyclischer oder verzweigter, gesättigter, ungesättigter oder aromatischer Kohlenwasserstoffrest mit bis zu 25 Kohlenstoffatomen, der eine oder mehrere Gruppen, ausgewählt aus -O-, -C(O)- und -NH- enthalten kann, oder R⁵ ist ein zweiwertiger Rest, der cyclische Strukturen innerhalb des Restes ST² ausbildet,
R⁶ Wasserstoff ist,
A⁻ wird ausgewählt aus Halogenid, wie Chlorid oder Bromid, Sulfat, Phosphat, Carboxylat, Alkylsulfat und Sulfonat.

In einer bevorzugten Ausführungsform der Erfindung wird der Rest ST¹ ausgewählt wird aus:
zweiwertigen, geradkettigen Kohlenwasserstoffresten mit bis zu 15 Kohlenstoffatomen, wie beispielsweise Hexamethylen,
zweiwertigen, cyclischen Kohlenwasserstoffresten mit bis zu 15 Kohlenstoffatomen, wie beispielsweise 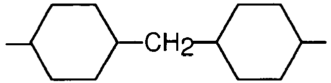 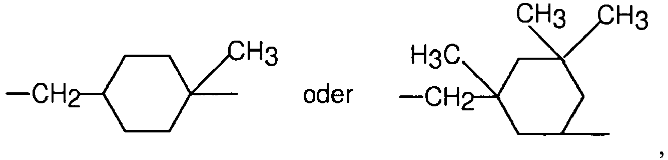
zweiwertigen, aromatischen Kohlenwasserstoffresten mit bis zu 15 Kohlenstoffatomen, wie beispielsweise auf Basis von 2,4-Toluyl, 2,6-Toluyl, Bisphenyl-methan- und Naphthylenstrukturen der Formeln:

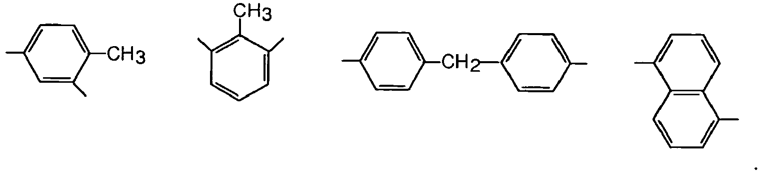

Bei ST¹ handelt es sich insbesondere um Strukturen, die sich einerseits direkt von Di- und höherfunktionellen Isocyanaten ableiten. Besonders bevorzugt bei den difunktionellen Strukturen sind zweiwertige, geradkettige Kohlenwasserstoffreste mit bis zu 15 Kohlenstoffatomen, beispielsweise Hexamethylen, zweiwertige, cyclische Kohlenwasserstoffreste mit bis zu 15 Kohlenstoffatomen, beispielsweise auf Basis von Biscyclohexyl-methanstrukturen 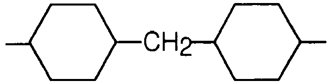 zweiwertige, verzweigte Kohlenwasserstoffreste mit bis zu 15 Kohlenstoffatomen, beispielsweise auf Basis von Methylcyclohexyl- oder Isophoronstrukturen 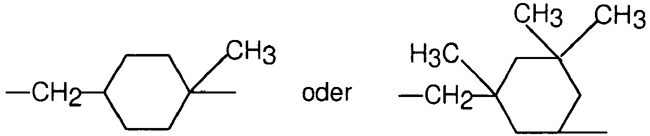 zweiwertige, aromatische Kohlenwasserstoffreste mit bis zu 15 Kohlenstoffatomen, beispielsweise auf Basis von 2,4-Toluyl, 2,6-Toluyl, Bis-phenylmethan- und Naphthylen-Strukturen

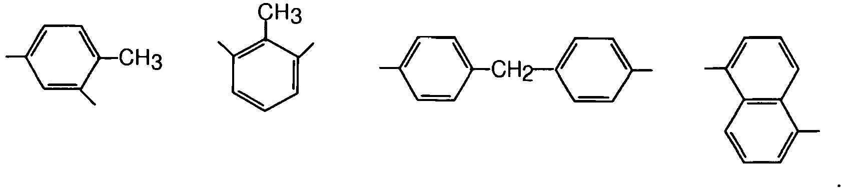

Entsprechend besonders bevorzugte Ausgangsmaterialien unter den Diisocyanaten sind Hexamethylendiisocyanat, Isophorondiisocyanat, Bis-(4-isocyanato-cyclohexyl)-methan, Toluylen-2,4-dilsocyanat, Toluylen-2,6-diisocyanat, Bis-(4-isocyanato-phenyl)methan, Naphthylen-1,5-diisocyanat, 1,3-Diisocyanato-4-methylcyclohexan, 5-Methyl-1,9-diisocyanatononan, 2,4-Dimethyl-1,8-diisocyanatooctan, 2-Methyl-1,5-diisocyanatopentan und 2-Ethyl-1,4-diisocyanatobutan.

Es liegt weiterhin im Rahmen der Erfindung, Uretdionsubstrukturen, die folgende Einheit 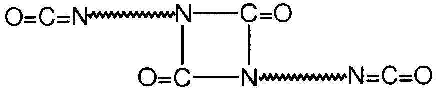 enthaltende Diisocyanate einzusetzen. Ein Beispiel hierfür ist das Isophorondlisocyanat-Dimer. Diese Startmoleküle werden durch Dimerisierung entsprechender, bevorzugt Diisocyanate gewonnen (H.J. Laas, R. Halpaap, J. Pedain, Journal f. Prakt. Chemie 336 [1994], 185-200; H.J. Laas, R. Halpaap, J. Pedain, Farbe+Lack 100 [1994], 330-336).

Es liegt weiterhin im Rahmen der Erfindung, höherfunktionelle Isocyanate zur Formierung des Kohlenwasserstoffrestes ST¹ einzusetzen. Beispiele sind Tris-(4-iso-cyanatophenyl)-methan (Desmodur^{®} R Bayer AG), das Umsetzungsprodukt aus Trimethylolpropan und Toluylen-2,4-diisocyanat/Toluylen-2,6-diisocyanat (Desmodur^{®} L, Bayer AG) und das Trimerisierungsprodukt von Hexamethylendiisocyanat (Desmodur^{®} N3400 Bayer AG).

Bei den Kohlenwasserstoffresten ST¹ handelt es sich in einer anderen bevorzugten Ausführungsform um komplexere Strukturen, die sich von α,ω-isocyanatfunktionalisierten Präpolymeren ableiten.

Bevorzugt handelt es sich bei diesen α,ω-isocyanatfunktionalisierte Präpolymeren um die Umsetzungsprodukte von
- Diolen mit Diisocyanaten
- OH-terminierten Polyethern, bevorzugt ethylenoxid- und propylenoxidbasierten Polyethern mit Diisocyanaten,
- OH-terminierten Polyestern mit Diisocyanaten,
- OH-terminierten Polycarbonaten mit Diisocyanaten,
- OH-terminierten Polyacrylaten mit Diisocyanaten,

Einzelheiten zu derartigen Urethanbrücken enthaltenden Präpolymeren können US 2004/0030086 und US 2006/0069255 entnommen werden. Alternativ ist es möglich, die α,ω-isocyanatfunktionalisierten Präpolymeren durch Umsetzung von Diaminen mit Diisocyanaten zu erzeugen. Bevorzugt handelt es sich bei diesen α,ω-iso-cyanatfunktionalisierten Präpolymeren um die Umsetzungsprodukte von
- Diaminen mit Diisocyanaten
- NH oder NH₂ terminierten Polyethern, bevorzugt ethylenoxid- und propylenoxidbasierten Polyethern mit Diisocyanaten,
- NH₂ terminierten Polyamiden mit Diisocyanaten,
- NH₂ terminierten Harnstoffen mit Diisocyanaten.

Beispiele für kommerziell verfügbare aminoterminierte Polyether sind die Jeffamine^{®} der ED Serie (Huntsman Corp.).

Die erfindungsgemäße Einführung von Siloxanblöcken in ST¹ erfolgt bevorzugt über α,ω-isocyanat-funktionalisierte Präpolymere. Diese siloxanhaltigen α,ω-isocyanat-funktionalisierten Präpolymeren werden bevorzugt durch Reaktion von
- α,ω-aminoalkyl-terminierten Siloxanen mit Diisocyanaten,
- α,ω-hydroxyalkyl-terminierten Siloxanen mit Diisocyanaten,
- α,ω-polyether-terminierten Siloxanen mit Diisocyanaten und
- α,ω-epoxy-terminierten Siloxanen mit Diisocyanaten, hergestellt.

Die Herstellung der entsprechenden α,ω-aminoalkyl-terminierten Siloxane, α,ω-hydroxyalkyl-terminierten Siloxane, α,ω-polyetherterminierten Siloxane, α,ω-epoxy-terminierten Siloxane ist Stand der Technik (Silicone, Chemie und Technologie, Vulkan Verlag Essen 1989, S. 85-90 und 120).

Es liegt weiterhin im Rahmen der Erfindung, siloxanbasierte höherfunktionelle Isocyanatpräpolymere zur Formierung des Kohlenwasserstoffrestes ST¹ einzusetzen.

Zu deren Synthese werden die aus dem Stand der Technik bekannten kammartig oder α,ω-endgestoppten und kammartig-, aminoalkyl-, hydroxyalkyl-, polyether-, epoxysubstituierten Siloxane mit Diisocyanaten umgesetzt.

Es liegt im Rahmen der Erfindung, die Bildung der Isocyanat-terminierten Präpolymeren gegebenenfalls zu katalysieren. Geeignete Katalysatoren sind z.B. Zinn(II) octoat, Dibutylzinn(II) laurat, tertiäre Amine, wie Triethylamin, und DABCO (US 2004/0147744).

Zur Einführung des Strukturelementes 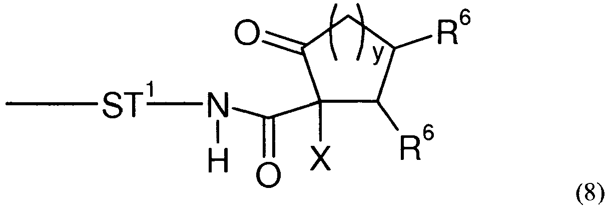 werden die vorstehend behandelten isocyanat-terminierten Präpolymeren mit substituierten CH-aciden cyclischen Ketonen des Standes der Technik zur Reaktion gebracht (US 6 827 875).

Bevorzugte cyclische Ketone sind Cyclopentanon-2-carboxymethylester (CPME) und Cyclopentanon-2-carboxyethylester (CPEE).

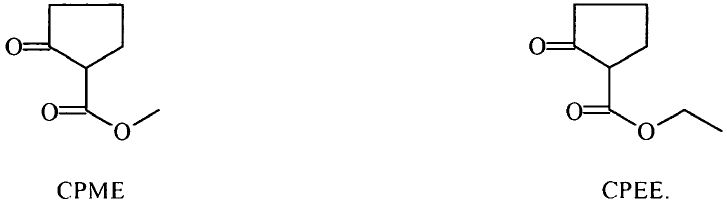

Diese Reaktion kann gegebenenfalls in Gegenwart von Katalysatoren ablaufen. Geeignete Katalysatoren sind u.a. Natriumcarbonat, Amine, wie DABCO und Zinksalze, wie Zink(II)ethylhexanoat (US 2004/0147704).

Im Ergebnis der Reaktion werden ST¹ enthaltende blockierte Intermediate gebildet. Diese Intermediate können mit geeigneten ST² enthaltenden Partnern zur Reaktion gebracht werden.

Bei den ST² enthaltenden Partnern handelt es sich im Fall nicht quaternierter Block-copolymerer in einer bevorzugten Ausführungsform um kohlenwasserstoff-basierte α,ω-hydroxy- oder aminofunktionalisierte Substanzen.

Bevorzugt handelt es sich um
- Kohlenwasserstoffdiole
- OH-terminierte Polyether, bevorzugt ethylenoxid- und propylenoxidbasierte Polyether,
- OH-terminierte Polyester,
- OH-terminierte Polycarbonate und,
- OH-terminierte Polyacrylate.

Alternativ handelt es sich um primäre und/oder sekundäre Aminogruppen tragende Substanzen, bevorzugt
- Kohlenwasserstoffdiamine
- Aminoalkohole, wie Ethanolamin
- NH- oder NH₂ terminierte Polyether, bevorzugt ethylenoxid- und propylenoxidbasierte Polyether,
- NH₂-terminierte Polyamide,
- NH₂-terminierte Harnstoffe.

Beispiele für kommerziell verfügbare aminoterminierte Polyether sind die Jeffamine^{®} der ED Serie (Huntsman Corp.).

In einer weiteren Ausführungsform handelt es sich bei den Kohlenwasserstoffresten ST² um komplexere Strukturen, die sich von α,ω-hydroxy-funktionalisierten Präpolymeren ableiten. Bevorzugt handelt es sich bei diesen α,ω-hydroxyfunktionalisierten Präpolymeren um die Umsetzungsprodukte von
- Diolen mit Diisocyanaten
- OH-terminierten Polyethern, bevorzugt ethylenoxid- und propylenoxidbasierten Polyethern mit Diisocyanaten,
- OH-terminierten Polyestern mit Diisocyanaten,
- OH-terminierten Polycarbonaten mit Diisocyanaten
- OH-terminierten Polyacrylaten mit Diisocyanaten.

Alternativ ist es möglich, die α,ω-aminofunktionalisierte Präpolymere, enthaltend primäre und/oder sekundäre Aminogruppen, durch Umsetzung von Diaminen mit Diisocyanaten zu erzeugen.

Bevorzugt handelt es sich bei diesen α,ω-aminofunktionalisierten Präpolymeren um die Umsetzungsprodukte von
- Diaminen mit Diisocyanaten
- NH oder NH₂ terminierten Polyethern, bevorzugt ethylenoxid- und propylenoxidbasierten Polyethern mit Diisocyanaten,
- NH₂-terminierten Polyamiden mit Diisocyanaten,
- NH₂-terminierten Harnstoffen mit Diisocyanaten,

Beispiele für kommerziell verfügbare aminoterminierte Polyether sind die Jeffamine^{®} der ED Serie (Huntsman Corp.).

Die erfindungsgemäße Einführung von Siloxanblöcken in ST² im Fall nicht quaternierter Blockcopolymerer erfolgt bevorzugt über
- α,ω-aminoalkyl-terminierte Siloxane, enthaltend primäre und/oder sekundäre Aminogruppen
- α,ω-hydroxyalkyl-terminierte Siloxane,
- α,ω-polyether-terminierte Siloxane

Die Herstellung der in ST² eingehenden α,ω-aminoalkyl-terminierten Siloxane, α,ω-hydroxyalkyl-terminicrten Siloxane, α,ω-polyether-terminierten Siloxane ist im Stand der Technik beschrieben (Silicone, Chemie und Technologie, Vulkan Verlag Essen 1989, S. 85-90 und 120).

In einer weiteren Ausführungsform erfolgt die Einführung von Siloxanblöcken in ST² über α,ω-hydroxy-funktionalisierte oder α,ω-NH₂- bzw. NH-funktionalisierte Präpolymere.

Diese siloxanhaltigen Präpolymeren werden bevorzugt durch Reaktion von
- α,ω-aminoalkyl-terminierten Siloxanen mit Diisocyanaten,
- α,ω-hydroxyalkyl-terminierten Siloxanen mit Diisocyanaten,
- α,ω-polyether-terminierten Siloxanen mit Diisocyanaten hergestellt.

Es liegt weiterhin im Rahmen der Erfindung, höherfunktionelle kohlenwasserstoffbasierte oder siloxanbasierte Substanzen zur Formierung des Restes ST² einzusetzen. Diese Materialien enthalten mehr als zwei Hydroxyl- bzw. primäre und/oder sekundäre Aminofunktionen.

Beispiele für höherfunktionelle kohlenwasserstoffbasierte Substanzen sind Glycerol, Pentaerythrol, Sorbitol, die Ethoxylate der genannten höherwertigen Alkohole, Tris-(2-aminoethyl)-amin und die NH₂-terminierten Alkoxylate der T-Jeffamin Serie (Huntsman Corp.).

Geeignete höherfunktionelle siloxanbasierte Substanzen mit α,ω- und/oder kammartiger Hydroxylsubstitution können beispielsweise durch Addition von Allylalkohol, Butindiol und den Alkoxylaten von Allylalkohol oder Butindiol an entsprechende SiH-Siloxane gewonnen werden.

Weitere geeignete höherfunktionelle siloxanbasierte Substanzen mit α,ω- und/oder kammartiger NH₂- und/oder NH-Substitution enthalten beispielsweise Aminopropyl- und Aminoethylaminopropyl-Einheiten. Geeignete Einheiten können weiterhin durch Öffnung von Epoxidstrukturen mit NH₃ oder primären Aminen gewonnen werden. Wesentlich ist, dass die Funktionalität dieser höherfunktionellen kohlcnwasserstoffbasierten oder siloxanbasierten Substanzen größer/gleich 3 beträgt.

Die Reaktionen der blockierten Präpolymeren mit den amino- oder hydroxyfunktioncllcn die ST²-Einheit bildenden Vorstufen werden bevorzugt im Bereich von Raumtemperatur bis 160 °C, bevorzugt bis 140 °C ausgeführt. Die Reaktionszeiten betragen wenige Minuten bis einige Stunden.

Es liegt im Rahmen der Erfindung, die Reaktion der mit cyclischen Ketonen blockierten Präpolymeren, die die ST¹ enthaltenden Gruppen der Formel (8) aufweisen, mit den amino- oder hydroxyfunktionellen ST² bildenden Vorstufen gegebenenfalls für die Umsetzung zu katalysieren. Geeignete Katalysatoren sind z.B. Dibutylzinndilaurat, Zink-2-ethylhexanoat und Wismut-2-ethylhexanoat (US 6 827 875).

Reaktionszeiten, Reaktionstemperaturen, der Einsatz von Katalysatoren und der erzielte Umsatz hängen in besonderer Weise vom Typ der Amino- und Hydroxylgruppen an den ST² bildenden Precursoren ab. Generell gilt, dass primäre Aminogruppen leichter reagieren als sekundäre Aminogruppen. Die Umsetzung von Hydroxylgruppen erfordert häufig zusätzlich die Anwesenheit eines Katalysators.

Es liegt im Rahmen der Erfindung, die gesamte Reaktionssequenz oder einzelne Teilschritte ohne Lösungsmittel oder aber in Gegenwart von Lösungsmitteln auszuführen. Bevorzugte Lösungsmittel sind typische Lacklösungsmittel, wie Methoxypropylacetat, Butylacetat, Toluen.

Im Ergebnis der dargestellten Gesamtreaktionssequenz werden Polyamid- bzw. Polyamid-Polyester Blockcopolymere erhalten, die mindestens in einem der Strukturelemente ST¹ und/oder ST² über Siloxaneinheiten verfügen.

Die Erfindung betrifft weiterhin Verfahren zur Herstellung der erfindungsgemäßen Polyamid-Polysiloxan-Verbindungen.

Nach einer ersten Variante wird eine Verbindung der Formel 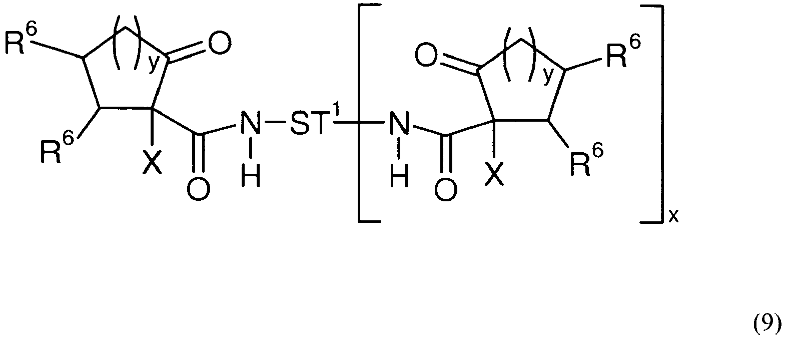 worin x, y, X, R⁶ und ST¹wie oben definiert sind,
mit einer Verbindung der Formel H-Y-ST²-Y-H, worin Y und ST² wie oben definiert sind, mit der Maßgabe, dass wenigstens einer der Reste ST¹ und/oder ST² einen Polysiloxanrest umfasst, gegebenenfalls in einem Lösungsmittel und gegebenenfalls in Anwesenheit eines Katalysators umgesetzt.

In Abhängigkeit von dem verwendeten Rest Y (-O-, -S- und -NR²-) werden bei der Ringöffnung Ester-, Thioester- und/oder Amid-Gruppen gebildet.

Die Verwendung von Verbindungen in denen x >1 ist führt naturgemäß zur Bildung verzweigter Strukturen. Erfindungsgemäß ist die Einführung verzweigter Strukturen auch durch die Verwendung polyfunktioneller Verbindungen des Typs

H-Y-ST²-(Y-H)ₓ

worin x > 1 ist, möglich.

In einer zweiten Variante des erfindungsgemäßen Verfahrens wird die Verbindung der Formel 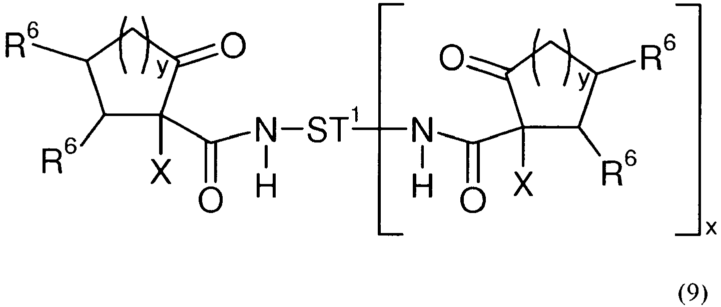 worin x, y, X, R⁶, ST¹ wie oben definiert sind,
mit einer Verbindung der Formel

HY²-ST³-NR⁵₂,

worin ST³, Y² und R⁵ wie oben definiert sind,
und einer Verbindung der Formel

Q-ST^{4V}-Q,

umgesetzt, worin
Q ein zur Alkylierung einer Aminogruppe befähigter Rest ist, und ST^{4V} gemeinsam mit dem aus Q nach der Quaternierungsreaktion hervorgehenden Molekülteil den Rest ST⁴ bildet,
mit der Maßgabe, dass wenigstens einer der Reste ST¹, ST³ und/oder ST⁴ einen Polyorganosiloxanrest umfasst.

Die Verwendung der ,asymmetrischen' Verbindungen der Formel

HY-ST³-NR⁵₂,

dient insbesondere in dieser Variante dazu über den Rest HY- die Ringöffnung des cyclischen Ketons zu bewirken, während der Rest -NR⁵₂ bevorzugt der Alkylierung unterliegt.

R⁵ ist in dieser Variante zwecksmäßig kein Wasserstoff, da der Rest -NR⁵₂ sonst auch zur Öffnung des cyclischen Ketons befähigt ist, und dass resultierende Amid einer Quaternierungsreaktion nicht mehr zugänglich ist.

Es ist aber natürlich möglich aus der Umsetzung der Verbindung 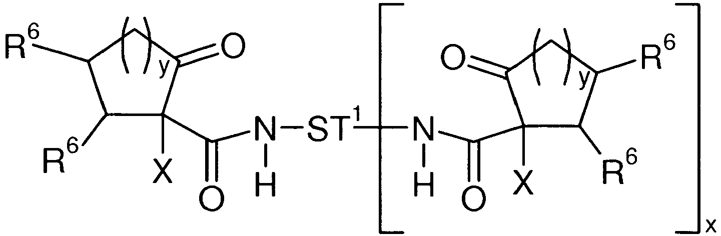 mit einem Überschuß der Verbindung

HY²-ST³-NR⁵₂,

worin R⁵ dann auch Wasserstoff sein kann, eine aminoterminierte Verbindung herzustellen, die anschließend mit der Verbindung

Q-ST^{4V}-Q,

umgesetzt wird, wobei in diesem Fall, da die terminale Gruppe -NR⁵₂ eine primäre oder sekundäre Aminogruppe ist, nicht notwendigerweise eine Quaternierung auftritt.

Bevorzugt ist es jedoch, dass R⁵ in dieser Variante nicht Wasserstoff ist, insbesondere Alkyl ist, so dass auf diese Weise Verbindungen mit Wiederholungseinheiten der Formel (3) 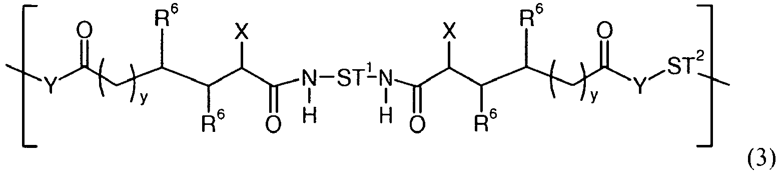 gebildet werden, in denen die Substituenten wie oben definiert sind, wobei ST² hier einen Rest der Formel

-ST³-N⁺(R⁵)₂-ST⁴-N⁺(R⁵)₂-ST³-

bildet, so dass Verbindung mit den Wiederholungseinheiten der Formel (3) mit quaternären Ammoniumgruppen, d.h. ionischen Gruppe entstehen, die den Verbindungen zum Beispiel eine entsprechende Hydrophilie oder Haftungsvermögen auf Oberflächen verleihen.

Die zur Quaternierung respektive Alkylierung der Aminogruppen befähigten Reste Q werden bevorzugt ausgewählt aus Epoxygruppen und Halogenalkylgruppen.

Zur Illustrierung des Restes ST^{4V} dient folgendes Beispiel, in dem eine Diepoxy-Verbindung umgesetzt wird:

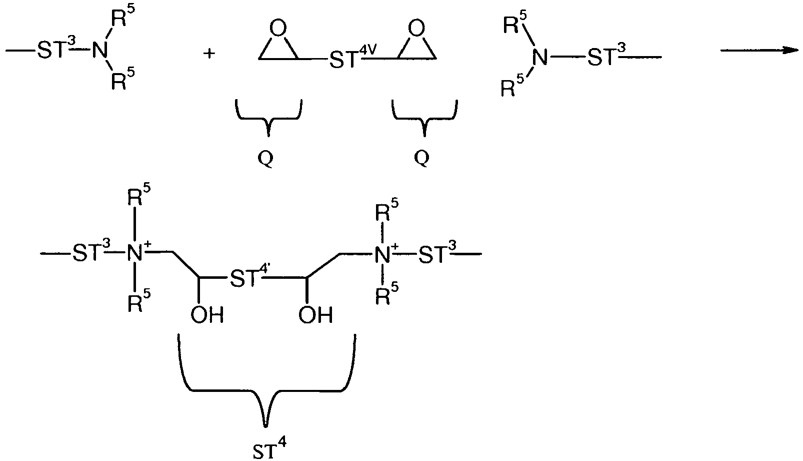

ST⁴ wird also aus ST^{4V} und aus den aus den Epoxygruppen resultierenden Molekülteilen gebildet.

In analoger Weise können Di(halogenalkyl)-Verbindungen als quaternierende Verbindung Q-ST^{4V}-Q verwendet werden.

Die zur Alkylierung von Aminogruppen befähigten Reste Q werden bevorzugt ausgewählt aus Epoxygruppen und Halogenalkylgruppen. Besonders bevorzugte Epoxygruppen enthaltenden Strukturen sind die Glycidylstruktur 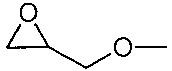 und eine Epoxy-Cyclohexyl-Struktur

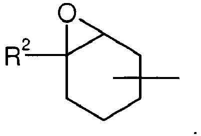

Bevorzugte Halogenalkyl-enthaltende Reste sind insbesondere Chlorpropyl-, Chlormethyl- und Chloralkylcarbonyloxy-Reste.

Die Verbindungen Q-ST^{4V}-Q werden beispielsweise ausgewählt aus der Gruppe, die besteht aus kohlenwasserstoffbasierten α,ω-epoxyfunktionalisierten Substanzen. Bevorzugt han-delt es sich bei den kohlenwasserstoffbasierten Diepoxidderivaten um
- Kohlenwasserstoffdiepoxide, beispielsweise Vinylcyclohexendiepoxid
- epoxyterminierte Polyether, bevorzugt ethylenoxid- und propylenoxidbasierte Polyether, beispielsweise glycidyltermininierte Polyether
- epoxyterminierte Polyester, und
- epoxyterminierte Polycarbonate.

Weiterhin werden die Verbindungen Q-ST^{4V}-Q beispielsweise ausgewählt aus der Gruppe, die besteht aus kohlenwasserstoffbasierten halogenfunktionalisierten Substanzen, bevorzugt Chloriden, Bromiden und Kohlenwasserstoffdihalogeniden. Vorzugsweise wählt man sie aus der Gruppe aus, die besteht aus:
- halogenterminierten Polyethern, bevorzugt ethylenoxid- und propylenoxidbasierte Polyether
- Halogencarbonsäureestern von Kohlenwasserstoffdiolen und Polyethern, bevorzugt ethylenoxid- und propylenoxidbasierten Polyethern, speziell Chloressigsäureester, Chlorpropionsäureester und Chlorbutansäureester von Kohlenwasserstoffdiolen und Polyethern.

Die Synthese der besonders bevorzugten Chlorcarbonsäureester erfolgt in bekannter Weise (Organikum, Organisch-Chemisches Grundpraktikum, 17. Auflage, VEB Deutscher Verlag der Wissenschaften, Berlin 1988, S. 402-408) durch Reaktion der Diolkomponente mit den entsprechenden Halogencarbonsäureanhydriden oder Halogencarbonsäurechloriden.

Sie können weiterhin aus den entsprechenden Vorstufen HY-ST²-YH, wie α,ω-hydroxyfunktionalisierten Präpolymeren hergestellt werden, die in einer bevorzugten Ausführungsform in die entsprechenden Verbindungen Q-ST^{4V}-Q wie α,ω-Halogencarbonsäureester, speziell Chloressigsäureester, Chlorpropionsäureester und Chlorbutansäureester überführt werden.

Die Einführung von Siloxanblöcken in die erfindungsgemäßen Polyamid-Polysiloxan-Verbindungen erfolgt in einer bevorzugten Ausführungsform der Erfindung über die Verwendung entsprechende Polysiloxangruppen-enthaltende Verbindungen Q-ST^{4V}-Q, welche bevorzugt ausgewählt werden aus
- α,ω-epoxyterminierte Siloxane, bevorzugt α,ω-glycidyl- und epoxycyclohexyl- terminierte Siloxane
- α,ω-halogenalkylterminierte Siloxane, bevorzugt chlorpropyl- und chlorpropenyl-terminierte Siloxane
- α,ω-halogencarbonsäureesterterminierte Siloxane, bevorzugt Ester der Chloressig-säure, Chlorpropionsäure und Chlorbutansäure,
- α,ω-halogencarbonsäureesterterminierte Polyethersiloxane, bevorzugt Ester der Chloressigsäure, Chlorpropionsäure und Chlorbutansäure.

Die Herstellung der Q-ST^{4V}-Q entsprechenden α,ω-Epoxy-terminierten Siloxane und α,ω-Halogenalkyl-terminierten Siloxane ist im Stand der Technik beschrieben (Silicone, Chemie und Technologie, Vulkan Verlag Essen 1989, S. 85-90 und 120). Die Herstellung von α,ω-Halogencarbonsäureester-terminierten Siloxanen kann in Analogie zur Vorgehensweise gemäß WO 02/10256, Beispiel 1 erfolgen. Hierbei werden SiH-Siloxane mit Halogencarbonsäureestern von olefinisch oder acetylenisch ungesättigten Alkoholen umgesetzt. Die Herstellung α,ω-Halogencarbonsäureester-terminierten Polyethersiloxanen kann in Analogie zu WO 02/10257 Beispiel 1 erfolgen. Hierbei werden SiH Siloxane mit Halogencarbonsäureestern olefinisch oder acetylenisch ungesättigter Polyether umgesetzt. Alternativ ist es möglich, α,ω-Polyethersiloxane mit Halogencarbonsäuren, deren Anhydriden oder Säurechloriden umzusetzen (US 5 650 529 O'Lenick).

Die Auswahl einer höherfunktionellen Substanz zur Einführung von ST³ kann über den Aspekt der Verzweigung/Vernetzung hinaus gezielt dafür genutzt werden, das innere Verhältnis der Struktureinheiten ST¹ : ST⁴ einzustellen. So führt die Verwendung von N,N-Bis-(3-dimethylaminopropyl)-N- isopropanolamin zu einem Verhältnis ST¹ : ST⁴ = 1 : 2 unter Annahme eines dem Wesen nach nicht-reaktiven zentralen N-Atoms.

Die Verwendung von N-(3-Dimethylaminopropyl)N,N-diisopropanolamin hingegen führt zu einem Verhältnis ST¹ : ST⁴ = 2 : 1.

Die Reaktionen der blockierten ST¹-haltigen Präpolymeren mit den amino- oder hydroxyfunktionellen ST³-bildenden Vorstufen werden bevorzugt im Bereich von Raumtemperatur bis 160 °C, bevorzugt bis 140 °C ausgeführt. Die Reaktionszeiten betragen wenige Minuten bis einige Stunden. Reaktionszeiten, Reaktionstemperaturen, der Einsatz von Katalysatoren und der erzielte Umsatz hängen in besonderer Weise vom Typ der Amino- und Hydroxylgruppen an den ST³-bildenden Vorstufen ab. Generell gilt, dass primäre Aminogruppen leichter reagieren als sekundäre Aminogruppen. Die Umsetzung von Hydroxylgruppen erfordert häufig zusätzlich die Anwesenheit eines Katalysators.

Es liegt im Rahmen der Erfindung, die Reaktion der blockierten ST¹-haltigen Präpolymeren mit den amino- oder hydroxyfunktionellen ST³-bildenden Vorstufen ggf. zu katalysieren. Geeignete Katalysatoren sind z.B. Dibutylzinndilaurat, Zink-2-ethylhexanoat und Wismut-2-ethylhexanoat (US 6 827 875).

Die Erfindung betrifft weiterhin die Verwendung der erfindungsgemäßen Polyamid-Polysiloxan-Verbindungen zur Herstellung von Beschichtungen, Mitteln zur Oberflächenmodifizierung, Elastomeren, Duromeren, Klebstoffen, Primern für Metall- und Kunststoffoberflächen, Polymeradditiven, Waschmitteladditiven, rheologischen Mitteln, kosmetischen Mitteln, Fasermodifizierungsmitteln.

In kosmetischen Formulierungen für Haare können die erfindungsgemäßen Polyamid-Polysiloxan-Verbindungen dabei insbesondere die Funktion von sogenannten Konditionierungsmitteln ("conditioner") ausüben, d.h. insbesondere die Haareigenschaften, wie Weichheit, Glanz, Fülle, Kämmbarkeit etc. günstig beeinflussen, wobei sie insbesondere auch in Kombination mit anderen üblichen Konditionierungsmitteln, wie z.B. Poly-alpha-olefine, fluorierte Öle, fluorierte Wachse, fluorierten Kautschuke, Carbonsäureestern mit mindestens 10 Kohlenstoffatomen, kationische Polymeren, in dem Medium der Formulierung unlösliche oder lösliche Silicone, Mineralöle, pflanzliche Ölen und tierische Ölen und deren Gemische wie beispielsweise in WO 99/009939 beschrieben verwendet werden können.

Die Erfindung betrifft weiterhin bevorzugt die Verwendung der erfindungsgemäßen Polyamid- Polysiloxan-Verbindungen zur Herstellung von Beschichtungen oder Mitteln zur Oberflächenmodifizierung von harten Oberflächen, wie beispielsweise Glas, Keramik, Kacheln, Beton und Stahlteilen, wie Autokarosserien und Schiffs-(wand)-körper.

Weiterhin betrifft die Erfindung bevorzugt die Verwendung der erfindungsgemäßen Polyamid-Polysiloxan-Verbindungen zur Herstellung von Primem zur Verbindung von Siliconelastomeren mit anderen Substraten, wie Stahl, Aluminium, Glas, Kunststoffen, wie Epoxidharzen, Polyamiden, Polyphenylensulfiden, Polyestern, wie Polyterephthalaten.

In einer weiteren bevorzugten Ausführungsform der Erfindung betrifft diese die Verwendung der erfindungsgemäßen Polyamid-Polysiloxan-Verbindungen zur Herstellung von Modifizierungsmitteln für thermoplastische Kunststoffe, wie Polyolefine, Polyamide, Polyurethane, Poly(meth)acrylate, Polycarbonate.

In einer weiteren bevorzugten Ausführungsform der Erfindung betrifft diese die Verwendung der erfindungsgemäßen Polyamid-Polysiloxan-Verbindungen zur Herstellung von Tieftemperatur-Schlagzähmodifikatoren.

Der Ausdruck "zur Herstellung von", wie er vorstehend verwendet wird, schließt dabei auch den Fall ein, dass die erfindungsgemäßen Polyamid-Polysiloxan-Verbindungen allein für die genannte Anwendung verwendet werden. D.h., das beispielsweise die erfindungsgemäßen Polyamid-Polysiloxan-Verbindungen selbst unmittelbar als Tieftemperatur-Schlagzähmodifikatoren verwendet werden können. Sie können aber auch vorher geeignet etwa durch Mischen, Compoundierung, Masterbatch-Herstellung geeignet bereitgestellt werden.

Weiterhin kann man die Polydiorganosiloxan-Urethan-Copolymere bevorzugt als Bestandteil in Kleb-und Dichtstoffen, als Basismaterial für thermoplastische Elastomere wie beispielsweise Kabelumhüllungen, Schläuche, Dichtungen, Tastaturmatten, für Membranen, wie selektiv gasdurchlässige Membranen verwenden. Eine weitere Verwendung der erfindungsgemäßen Copolymere sind Beschichtungen, wie Antifouling-, Antihaftbeschichtungen, gewebeverträgliche Überzüge, flammgehemmte Überzügen und biokompatible Materialien.

Diese können als Überzugsmittel für Kosmetika, Körperpflegemittel, Lackadditive, Hilfsatoff in Waschmitteln,Entschäumerformulierungen und Textilbearbeitung, zum Modifizieren von Harzen oder zur Bitumenmodifizierung dienen.

Weitere Verwendungen umfassen Verpackungsmaterial für elektronische Bauteile, Isolations- oder Abschirmungsmaterialicn, Dichtungsmaterial in Hohlräumen mit Kondensatwasserbildung, wie Flugzeuge, Flugzeugzellen, Schiffe, Automobil, Antifogging-Beschichtungen für Scheinwerferscheiben (Innenseite), Scheiben für Wohngebäude, Fahrzeuge oder medizinische Geräte sowie Additive für Putz-, Reinigungs- oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungs-material für Textilfasern oder textile Gewebe, als Beschichtungsmaterial für Naturstoffe wie z.B. Leder und Pelze, als Material für Membranen und als Material für photoaktive Systeme z. B. für lithographische Verfahren, optische Datensicherung oder optische Datenübertragung.

In einer weiteren bevorzugten Ausführungsform der Erfindung betrifft diese die Verwendung der erfindungsgemäßen Polyamid-Polysiloxan-Verbindungen zur Herstellung von Viskositätsreglern, antistatischen Mitteln, von Mischungskomponenten für Silikonkautschuke, die peroxidisch oder durch Hydrosilylierung (Platin-Katalyse) zu Elastomeren vernetzt werden können, und dort zur Modifizierung von Oberflächeneigenschaften, zur Modifizierung der Diffusion von Gasen, Flüssigkeiten etc. führen, bzw. das Quellverhalten der Silikonelastomere modifizieren, zur Herstellung von Weichmachern für Textilfasern zur Behandlung der Textilfasern vor, während und nach der Wäsche, von Mitteln zur Modifizierung von natürlichen und synthetischen Fasern, wie beispielsweise Haaren, Baumwollfasern und Synthesefasern, wie Polyesterfasern und Polyamidfasern sowie Mischgeweben, von Textilausrüstungsmitteln, sowie von detergenzienhaltigen Formulierungen, wie Waschmitteln, Reinigungsmitteln.

Die vorliegende Erfindung betrifft weiterhin neue Waschmittelformulierungen, kosmetische Formulierungen, Faserbehandlungsformulierungen, die die erfindungsgemäßen Polyamid-Polysiloxan-Verbindungen enthalten.

So können die erfindungsgemäßen Polyamid-Polysiloxan-Verbindungen beispielsweise in festen oder flüssigen Waschmittelformullerungen in Anteilen von etwa 0,1 bis 10 Gew.-% bezogen auf die Gesamtmenge der Fornulierung vorliegen, in kosmetischen Formulierungen und Faserbehandlungsformulierungen, wie Textilpflegemitteln, in Anteilen von etwa 0,1 bis 50 Gew.-% bezogen auf die Gesamtmenge der Fornulierung vorliegen.

Bevorzugt können die erfindungsgemäßen Polyamid-Polysiloxan-Verbindungen zur Behandlung und Ausrüstung von harten Oberflächen, wie Glas, Keramik, Kacheln, Kunststoffoberflächen, Metalloberflächen, Lackoberflächen, speziell Schiffskörpern und Automobilkarosserien, ganz speziell auch in Trocknerformulierungen für die maschinelle Autowäsche, als Kleber bzw. Primer, bevorzugt zur Verbindung von Siliconelastomeren mit anderen Substraten, wie Stahl, Aluminium, Glas, Epoxidharz, Polyamid, als Modifikatoren, z.B. Tieftemperatur-Schlagzähmodifikatoren und Polaritätsmodifikatoren, für kohlenwasserstoffbasierte Polymere und siliconbasierte Elastomersysteme, die auf peroxidischer und Pt-katalysierter Vernetzung beruhen, eingesetzt werden.

Sie können weiterhin zur Behandlung von natürlichen und synthetischen Fasern, beispielsweise Baumwolle, Wolle, polyester- und polyamidbasierten Synthesefasern, speziell in Form von Textilien, in speziellen Mitteln zur Faserbehandlung, insbesondere in anionische, nichtionische und kationische Tenside enthaltenden Waschmittelformulierungen verwendet werden, wobei die erfindungsgemäßen Verbindungen in das Waschmittel direkt eingebaut sein können, separat in den laufenden Waschprozeß oder nach dem Waschprozeß dosiert werden können, und den behandelten Substraten Weichheit, verbesserte Elastizität und verringerte Knitterneigung bei Erhalt einer akzeptablen Hydrophilie verliehen wird.

Sie können ebenfalls als Bestandteil separater Weichmachersysteme, speziell auf Basis kationischer Tenside, nach der Wäsche von Fasern und Textilien, als Bügelhilfe und Mittel zur Verhinderung bzw. Rückgängigmachung von Textilverknitterungen, dienen.

Sie können weiterhin zur Faserausrüstung, speziell zur Erstausrüstung und Behandlung von beispielsweise Baumwolle, Wolle, polyester- und polyamidbasierten Synthesefasern, speziell in Form von Textilien, Papier und Holz genutzt werden.

Sie können weiterhin wie bereits dargelegt vorteilhaft in in kosmetischen Systemen zur Behandlung von Haaren und Haut eingesetzt werden.

Besonders bevorzugte Anwendungsgebiete für die erfindungsgemäßen Polyamid-Polysiloxan-Verbindungen sind auch, bevorzugt wässrige, Lösungen, Mischungen, Emulsionen und Mikroemulsionen insbesondere als Basis für kosmetische Formulierungen.

Die erfindungsgemäßen Polyamid-Polysiloxan-Verbindungen können als Reinsubstanz, Lösung, Mischung, Emulsion oder Mikroemulsion in Form von Flüssigkeiten, Cremes oder Pasten als Einsatzstoff für die Herstellung geeigneter, erfindungsgemäßer kosmetischer Formulierungen unterschiedlicher Viskositäten verwendet werden.

Das Verfahren zur Herstellung von Formulierungen der erfindungsgemäßen Polyamid-Polysiloxan-Verbindungen, wie beispielsweise zur Behandlung von Substraten, wie harte oder weiche Substrate, kann beispielsweise aus den folgenden Schritten bestehen:
a) Herstellen einer Vormischung in Form von Lösungen, Mischungen oder Emulsionen mit den erfindungsgemäßen Polyamid-Polysiloxan-Verbindungen und
b) Herstellung einer weiteren Mischung unter Verwendung der Vormischung a) sowie Zusatz gegebenenfalls weiterer Tenside, Hilfsstoffe und anderer Additive oder
c) Zusammenfassen der Schritte a) und b), in dem man das Vermischen der Bestandteile mit Rührern, Dissolvern, Knetern, Pumpen, Mischschnecken, Mischdüsen, Nieder- und Hochdruckemulgiuergeräten durchführt.

Die Verfahren werden mit den in der Technik (Ullmann's Enzyklopädie) bekannten Maschinen und Apparaten, wie z. B. jeder Form von Rührern in geeigneten Behältern, Apparaten bzw. Mischgeräten, wie zuvor beschrieben, verwirklicht.

Die direkte Vermischung aller Bestandteile ist möglich. Es wird jedoch die Herstellung einer Vormischung bevorzugt, da sie zur schnelleren und besseren Verteilung führt und zum Teil unumgänglich ist, da die unterschiedlichen Stoffgruppen andernfalls nicht in geeigneter Weise oder nur unter hohem Aufwand miteinander vermischt bzw. emulgiert bzw. dispergiert werden können. Geeignete Vor- bzw. Zwischenmischungen können bevorzugt Mischungen in Form von Lösungen, Pasten, Cremes oder sonstige Formen von Emulsionen oder Dispersionen sein. Besonders bevorzugt ist die Herstellung und Verwendung von Mikroemulsionen mit 10 bis 200 nm mittlerem Partikeldurchmesser in kosmetischen Formulierungen.

Die Formulierungen, die die erfindungsgemäßen Polyamid-Polysiloxan-Verbindungen enthalten, können beispielsweise in verschiedenen Darreichungsformen wie für die Haarbehandlung hergestellt werden. Bevorzugt werden die die erfindungsgemäßen Polyamid-Polysiloxan-Verbindungen enthaltenden Zusammensetzungen als kosmetische Formulierungen zur Behandlung keratinhaltiger Substrate wie z. B. menschliche und tierische Haare oder Haut als alkoholische oder polyalkoholische Lösung oder als Emulsion zur Anwendung gebracht. Abhängig von den verwendeten Rohstoffen, Hilfsstoffen sowie des Mischverfahrens bei der Herstellung, werden klare, trübe und weiße Formulierungen erhalten.

Zur Herstellung von Lösungen und Mischungen, die die erfindungsgemäßen Polyamid-Polysiloxan-Verbindungen enthalten, eignen sich bevorzugt alkoholische und polyalkoholische Lösemittel sowie deren Mischungen mit Wasser, ölartigen Substanzen und übliche Silikone (u.a Polydimethylsiloxane) sowie binäre und ternäre Mischungen von Lösemitteln und/oder ölartigen Substanzen und/oder Silikonen. Besonders bevorzugte Lösemittel sind hierbei Ethanol, Isopropanol, Ethylenglykol und Ethylenglykolether, Polyethylenglykole und deren Ether, Propylenglykol und Propylenglykolether, Polypropylenglykole und deren Ether und Glycerin und deren Mischungen. Besonders bevorzugte ölartige Substanzen sind Mineralölprodukte sowie Öle pflanzlichen, tierischen und synthetischen Ursprungs und deren Mischungen. Besonders bevorzugte Silikone, die von den erfindungsgemäßen Polyamid-Polysiloxan-Verbindungen verschieden sind, wie cyclische und lineare Polydimethylsiloxane und deren Mischungen wie z. B. (nach INCI) Cyclomethicone, Cyclotetrasiloxane, Cyclopentasiloxane, Cyclohexasiloxane, Dimethicone mit einem Viskositätsbereich von 0,65 bis 60.000.000 mPa.s bei 25 °C und Dimethiconol mit einem Viskositätsbereich von 10 bis 60.000.000 mPa.s bei 25 °C.

Bevorzugte Lösungen und Mischungen, die die erfindungsgemäßen Polyamid-Polysiloxan-Verbindungen enthalten, weisen die folgende Zusammensetzung in Gew. %, bezogen auf das Gesamtgewicht der Zusammensetzung, auf:
Lösungen bzw. Mischungen:

| | |
|---|---|
| 0.1 - 99,9% | erfindungsgemäße Polyamid-Polysiloxan-Verbindungen |
| 0.1 - 99,9% | Lösemittel und/oder Öl und/oder Silikone, und/oder Wasser |

Zusammensetzungen der Emulsionen der erfindungsgemäßen Polyamid-Polysiloxan-Verbindungen:
Zur Herstellung der Emulsionen werden allgemein Wasser und nichtionische, kationische und amphotere Tenside sowie Tensidmischungen verwendet. Außerdem können Emulsionen Hilfsstoffe wie z. B. anorganische und organische Säuren, Basen und Puffer, Salze, Verdicker, Stabilisatoren für Emulsionen wie z. B. 'Xanthan Gum', Konservierungsmittel, Schaumstabilisatoren, Entschäumer und Lösemittel wie z. B. Alkohole (Ethanol, Isopropanol, Ethylenglykol, Polyethylenglykol, Propylenglykol, Polypropylenglykol, Glykolether und Glycerin und deren Mischungen) enthalten.

Die erfindungsgemäßen Polyamid-Polysiloxan-Verbindungen, die in den Emulsionen verwendet werden, können bei der Herstellung von Emulsionen auch selbst als Emulgator dienen.

Eine bevorzugte Emulsion, die bevorzugt zur Herstellung von kosmetischen Formulierungen verwendet werden kann, besteht beispielsweise aus folgenden Bestandteilen in Gew.-%, bezogen auf die Gesamtmenge der Zusammensetzung:

| | |
|---|---|
| 10 - 50 % | erfindungsgemäße Polyamid-Polysiloxan-Verbindungen, |
| 1 - 35 % | Tenside, |
| 0 - 10 % | Hilfsstoffe, |
| 0 - 20 % | Lösungsmittel, |
| auf 100 % | ergänzt durch Wasser. |

Mikroemulsionen für kosmetische Formulierungen, die Ausrüstung von Textilien und anderen faserförmigen Substraten oder die Beschichtung harter Oberflächen:
Besonders bevorzugt ist die Herstellung von Mikroemulsionen mit einem hohen Aktivgehalt an erfindungsgemäßen Polyamid-Polysiloxan-Verbindungen, da diese neben der Möglichkeit zur Herstellung klarer kosmetischer Formulierungen zusätzlich den Vorteil der prozesstechnisch einfachen Einarbeitung ("Cold Process") in wässrige Formulierungen bieten. Es besteht die Möglichkeit, die erfindungsgemäßen Polyamid-Polysiloxan-Verbindungen bei der Herstellung von Mikroemulsionen in Form der weiter oben beschriebenen Lösungen und Mischungen einzusetzen. Ein bevorzugter Aktivgehalt der erfindungsgemäßen Polyamid-Polysiloxan-Verbindungen in der Emulsion liegt zwischen 5 und 60 Gew.-%, besonders bevorzugt sind 10-50 Gew.-% bezogen auf die Gesamtmenge der Zusammensetzung.

Eine ganz speziell bevorzugte Mikroemulsion besteht aus folgenden, die Erfindung jedoch nicht limitierenden Bestandteilen in Gew.% bezogen auf die Gesamtmenge der Mikroemulsion:

| | |
|---|---|
| 20 - 80 % | erfindungsgemäße Polyamid-Polysiloxan-Verbindungen |
| 0 - 35 % | Tenside |
| 0 - 10 % | Hilfsstoffe |
| 0 - 20 % | Lösungsmittel |
| auf 100 % | ergänzt durch Wasser. |

Ein weiterer Gegenstand der Erfindung ist die Verwendung der mit den erfindungsgemäßen Polyamid-Polysiloxan-Verbindungen hergestellten Lösungen, Mischungen bzw. Emulsionen in einer kosmetischen Formulierung.

Diese kosmetischen Formulierungen werden unter Verwendung der zuvor hergestellten Lösungen oder Emulsionen hergestellt, sie können aber auch direkt aus den Einzelbestandteilen erzeugt werden.

### Kosmetische Formulierungen:

Kosmetische Formulierungen schließen beispielsweise ein:
Sogenannte "Rinse-off" Produkte wie z.B. "2-in-1" Shampoos, "Body Wash" und Haarspülungen zur Behandlung von Haar während und nach der Reinigung oder nach dem Färben oder der Behandlung von Haar vor der Bleichung, der Lockung oder Entkräuselung, sowie sogenannte "Leave-in" Produkte wie Haarkuren, Pflegecremes, Frisiercremes, Haargele, Haarstylingprodukte, Haarfestiger, Haarsprays, Pumpsprays, Fönwellmittel und Fönfestiger. Darüber hinaus umfassen die Formulierungen ebenfalls Haarfärbemittel, die je nach Waschbeständigkeit des erzielten Farbergebnisses in 3 Typen - permanente, semipermanente und temporäre Haarfärbemittel - unterschieden werden können. Der Begriff Haare beinhaltet hierbei alle keratinhaltigen Fasern, inbesondere aber menschliches Haar. Die Haarfärbemittel enthalten beispielsweise neben den erfindungsgemäßen Polyamid-Polysiloxan-Verbindungen übliche Silikone, Tenside, Hilfsstoffe und Färbemittel. Jeder dieser Inhaltsstoffe kann entweder allein oder in Kombination mit weiteren Inhaltsstoffen verwendet werden und steht für zusätzliche Funktionen in den Formulierungen, die zur Erhöhung des Volumens, der Kämmbarkeit und des Glanzes sowie der Verminderung des Auswaschens der Farbe von und aus gefärbten keratinhaltigen Substraten wie z.B. menschlichem und tierischem Haar dienen und mindestens eine Polyamid-Polysiloxan-Verbindungen enthalten.

Die im Zusammenhang mit den kosmetischen Formulierungen erwähnten Abkürzungen werden im INCI (The Cosmetic, Toiletry and Fragrance Association Washington DC) erklärt.

Die neben den erfindungsgemäßen Polyamid-Polysiloxan-Verbindungen hierbei umfaßten Silikone, schließen beispielsweise ein:
Cyclische, lineare und verzweigte Polydimethylsiloxane mit einer Viskosität von 0.65 - 200.000.000 mPa.s bei 25 °C sowie deren Mischungen wie z.B. Octaorganocyclotetrasiloxane, Octamethylcyclotetrasiloxane, Decaorganocyclopentasiloxane, Dodecaorganocyclohexasiloxane, wobei der organische Rest bevorzugt Methyl bedeutet, wie SF 1173, SF 1202, SF 1217, SF 1204 und SF 1258 von GE Bayer Silicones, Dimethicone wie die Baysilone M Öle (M3 bis M 2.000.000), SE 30, SF 1214, SF 1236, SF 1276 und CF 1251 von GE Bayer Silicones und Dimethiconole wie Baysilone von GE Bayer Silicones /Momentive Performance Materials und DC 1501 und DC 1503 von Dow Corning sowie SiOH-endgestoppte hochmolekulare Polydimethylsiloxane.

Der Einsatz der oben beschriebenen Polydimethylsiloxane in Form von nicht-ionischen, anionischen und kationischen Emulsionen wie z.B. SM 2169, SM 2785, SM 555, SM 2167 und SM 2112 von GE Bayer Silicones /Momentive Performance Materials in Kombination mit Emulsionen der erfindungsgemäßen Polyamid-Polyorganosiloxan-Verbindungen und/oder der Einsatz von Mischungen und Lösungen der oben beschriebenen Polydimethylsiloxane mit den erfindungsgemäßen Polyamid-Polysiloxan-Verbindungen ist hierbei besonders bevorzugt, da sich aus diesen Kombinationen besondere Eigenschaften von Haarpflegeprodukten ableiten lassen, wie das für bisher bekannte amino-funktionelle Silikone bereits umfangreich in der Literatur beschrieben wurde (WO 99/44565, WO 99/44567, WO 99/49836, WO 99/53889, WO 97/12594, US 6,028,031, EP 0811371, WO 98/18443, WO 98/43599 und US 2002-0182161).

Ebenfalls geeignet sind feste Silikone, sogenannte MQ-Harze, wie z.B. SR 1000 von GE Bayer Silicones /Momentive Performance Materials und deren Lösungen in Lösemitteln wie den oben genannten Silikone und aliphatischen Lösungsmitteln wie z.B. Isododekan.

Ebenfalls geeignet sind organofunktionelle Silikone, wie Alkyl-, Aryl-, Arylalkyl-, Phenyl-, Fluoralkyl-, und Polyether-modifizierte Silikone wie die Typen SF 1632, SF 1642, SF 1555, Baysilone CF 1301, Baysilone PK 20, FF 157, SF 1188A, SF 1288 und SF 1388 von GE Bayer Silicones/Momentive Performance Materials.

### Tenside:

Tenside als Inhaltstoffe kosmetischer Formulierungen werden beschrieben in A. Domsch: Die kosmetischen Präparate, Verlag für Chem. Industrie, 4. Auflage, 1992, im Kosmetikjahrbuch 1995, Verlag für chemische Industrie, 1995, und H. Stache, Tensidtaschenbuch, 2. Auflage, Carl Hanser Verlag, 1981.

### Anionische Tenside:

Exemplarisch jedoch nicht limitierend sind folgende anionische Tenside als Bestandteil der Formulierungen geeignet: Alkylsulfate, Alkylethersulfate, Alkarylsulfate, Olefinsulfonate, Alkylamid-ethersulfate, Acylisethionate, Acylglutamate, Alkylethercarboxylate, Methyltauride und Tauride, Sarkoside, Sulfosuccinate, Eiweiß-fettsäurekondensate, Alkylphosphate und Alkyletherphosphate. Hierbei können die freien Säuren sowie deren Alkalimetallsalze, Magnesium-, Ammonium- und Mono-, Di- und Triethanolaminsalze verwendet werden.

Die Alkyl- und Acylgruppen enthalten typischerweise 8-18 C-Atome und können ungesättigt sein. Die Alkylthersulfate, Alkylamidethersulfate, Alkylethercarboxylate und Alkyletherphosphate können 1-10 Ethylenoxid- oder Propylenoxid- oder eine Kombination aus Ethylenoxid- und Propylenoxideinheiten enthalten.

### Amphotere Tenside:

Exemplarisch jedoch nicht limitierend sind folgende amphotere Tenside als Bestandteil der Formulierungen geeignet:
Alkylbetaine, Alkylamidobetaine, Sulfobetaine, Acetate und Diacetate, Imidazoline, Propionate und Alkylaminoxide.
Die Alkyl- und Acylgruppen enthalten hierbei 8-19 C-Atome.

### Nichtionische Tenside:

Exemplarisch jedoch nicht limitierend sind folgende nichtionische Tenside als Bestandteil der Formulierungen geeignet:
Alkylethoxylate, Arylethoxylate, ethoxylierte Ester, Polyglykolamide, Polysorbate, Glycerinfettsäure-Ethoxylate, Alkylphenolpolyglycolether und Zuckertenside wie z.B. Alkylglycoside.

### Kationische Tenside:

Bei kationischen Tensiden wird unterschieden zwischen reinen kationischen Tensiden und kationischen Polymeren.

### Reine kationische Tenside:

Exemplarisch jedoch nicht limitierend sind folgende nichtionische Tenside als Bestandteil der Formulierungen geeignet:
Monoalkylquats, Dialkylquats, Trialkylquats, Tetraalkylquats, Benzylammoniumsalze, Pyridinsalze, Alkanolammoniumsalze, Imidazolinsalze, Oxazolinsalze, Thiazolinsalze, Salze von Aminoxiden, Sulfonsalze, wobei der Begriff "quat" das Vorliegen mindestens einer quaternären Ammoniumgruppe impliziert.

### Kationische Polymere:

Insbesondere für "2-in-1" Shampoos werden neben den reinen kationischen Tensiden auch kationisch modifizierte Polymere eingesetzt. Eine umfassende Beschreibung dieser Polymere liefern US 5,977,038 und WO 01-41720 A1. Bevorzugt sind hierbei kationische Polyacrylamide, kationische Eiweißderivate, Hydroxyalkylcelluloseether und kationische Guar Derivate. Besonders bevorzugt sind kationische Guar Derivate mit dem CTFA Namen Guar Hydroxypropyltrimonium Chloride. Diese Typen sind erhältlich unter den Handelsnamen Cosmedia Guar C 261 (Henkel), Diagum P 5070 (Diamalt), Jaguar C-Typen und Jaguar EXCEL von Rhodia.

### Hilfsstoffe:

Hilfsstoffe als Inhaltstoffe insbesondere von kosmetischen Formulierungen werden beschrieben in: A. Domsch, Die kosmetischen Präparate, Verlag für Chem. Industrie, 4. Auflage, 1992; und in: Kosmetikjahrbuch 1995, Verlag für Chemische Industrie, 1995.

Exemplarisch jedoch nicht limitierend sind folgende Hilfsstoffe als Bestandteil der Formulierungen geeignet:
Anorganische und organische Säuren, Basen und Puffer, Salze, Alkohole wie z.B. Ethanol, Isopropanol, Ethylenglykol, Polyethylenglykol, Propylenglykol, Polypropylenglykol, Glykolether und Glycerin, Verdicker, Stabilisatoren für Emulsionen wie z. B. Xanthan Gum, Rückfetter, Konservierungsmittel, Schaumstabilisatoren, Entschäumer, Perlglanz und Trübungsmittel wie z.B. Glykoldistearate und Titandioxid, Kollagenhydrolysat, Keratinhydrolysat, Seidenhydrolysat, Antischuppenwirkstoffe wie z.B. Zinkpyrithion, Salicylsäure, Selendisulfid, Schwefel und Teerpräparate, polymere Emulgatoren, Vitamine, Farbstoffe, UV Filter, Bentonite, Parfumöle, Duftstoffe, Styling Polymere, Feuchtigkeitsspender, Pflanzenextrakte und weitere natürliche oder naturidentische Rohstoffe.

Es ist bekannt, dass durch den Zusatz von öl- und wasserlöslichen UV Filtern oder Kombinationen von UV Filtern in kosmetischen Formulierungen zur Pflege und Behandlung von keratinhaltigen Substraten wie menschliches und tierisches Haar der Abbau von Farbstoffen und somit das Ausbleichen und Verblaßen von gefärbten keratinhaltigen Substraten durch UV Strahlung entscheidend vermindert oder sogar gänzlich verhindert werden kann.

### Inhaltsstoffe für Haarfärbemittel:

Farbstoffe und andere Inhaltsstoffe von Haarfärbemitteln werden beschrieben in: A. Domsch, Die kosmetischen Präparate, Verlag für chem. Industrie, 4. Auflage, 1992. Farbstoffe werden beschrieben in: Verordnung über Kosmetische Mittel (Kosmetik Verordnung), Bundesgesetzblatt 1997, Teil I S. 2412, § 3 und Anlage 3 und in European Community (EC) Directive, 76/68/EEC, Annex IV.

Im Folgenden werden Haarfärbemittel unterschieden in permanente, semipermanente und temporäre Haarfärbemittel.

### Permanente Haarfärbemittel:

Dauerhafte Färbungen die auch durch mehrere Haarwäschen (mehr als 10) nicht ausgewaschen werden entstehen durch chemische Reaktion zwischen Farbstoffvorprodukten unter oxidative Bedingungen durch Wasserstoffperoxid. Hierbei bestimmt die Mischung der entsprechenden Komponenten das erzielbare Farbergebnis.

Man unterscheidet bei den Vorproduktcn zwischen Oxidationsbasen (Entwickler) und Kupplungskomponenten (Modifiziercr).

### Oxidationsbasen:

Exemplarisch jedoch nicht limitierend sind folgende Oxidationsbasen als Bestandteil der Formulierungen geeignet:
m- und p-Phenylendiamine (Diaminobenzole), deren N-substituierte Derivate und Salze, N-substituierte Derivate des o-Phenylendiamins, o-, m- und p-Toluylendiamine (Methyl-diaminobenzole), deren N-substituierte Derivate und Salze, p-Aminodiphenylamin, -hydrochlorid und -sulfat, o-, m- und p-Aminophenol und -hydrochlorid, 2,4-Diaminoisosulfat (4-Methoxy-m-phenylendiaminsulfat), o-Chlor-p-phenylendiaminsulfat, Pikra-minsäure (2,4-Dinitro-6-aminophenol) und 2,4-Dinitro1-naphtol-sulfonsäure sowie deren Natriumsalz.

### Kupplungskomponenten:

Exemplarisch jedoch nicht limitierend sind folgende Kupplungskomponenten als Bestandteil der Formulierungen geeignet:
Hydrochinon (1,4-Dihydroxybenzol), Resorcin (1,3-Dihydroxybenzol), Brenzcatechin (1,2-Dihydroxybenzol), α-Naphtol (1-Hydroxynaphtalin), Pyrogallol (1,2,3-Trihydroxybenzol) und 2,6-Diaminopyridin.

Üblicherweise werden Oxidationsbasen und Kupplungskomponenten mit Tensiden in Öl-in-Wasser Emulsionen eingearbeitet, jedoch sind auch einfache Lösungen oder Shampoos als Formulierungen bekannt. Die Formulierungen enthalten darüber hinaus Antioxidantien wie z.B. Natriumsulfit, Natriumdithionit, Ascorbinsäure oder Thioglykolsäure zur Stabilisierung der Vorstufen und werden mit alkalischen Substanzen wie z.B. Ammoniak auf einen pH-Wert zwischen 8 und 12 (bevorzugt 9-11) eingestellt. Außerdem werden Tenside als Netzmittel, Komplexbildner für Schwermetalle, Duftstoffe zum Überdecken des Ammoniakgeruchs, Conditioner zum Verbessern des Haargefühls und zum Schutz des Haares und Lösungsmittel wie Ethanol, Ethylenglykol, Glycerin oder Benzylalkohol zugesetzt.

Typischerweise werden permanente Haarfärbemittel als 2 Komponentensyteme angeboten bestehend aus Farblösung, -creme oder -shampoo die oben beschrieben ist und aus der Entwicklerlösung. Die Entwicklerlösung enthält hierbei zwischen 6-12 % Wasserstoffperoxid und kann optional auch mit Bestandteilen der die Farbkomponenten enthaltenden Formulierung versetzt werden. Die Peroxidlösung muß hierbei jedoch sorgfältig stabilisiert sein.

### Semipermanente Haarfärbemittel:

Semipermanente Färbungen wurden entwickelt, um die Färbung für 6-10-malige Wäsche mit Shampoo aufrecht zu erhalten. Hierbei werden sogenannte direktziehende Farbstoffe verwendet, die im Wesentlichen der Gruppe der Nitro-, Azo- und Anthrachinonfarbstoffe gehören. Diese Farbstoffe sind klein genug, um in das Haar zu penetrieren. Typischerweise eingesetzte Formulierungen sind Lösungen, Cremes, Shampoos oder auch Aerosolschäume. Die Zusammensetzung ist vergleichbar mit den die Farbkomponente enthaltenden Formulierungen die als permanente Haarfärbungen werden.

### Temporäre Haarfärbemittel:

Temporäre Färbungen, auch Tönungen genannt, enthalten im Unterschied zu den semipermanenten Haarfärbemitteln größere Farbstoffmoleküle, die nicht in der Lage sind in das Haar einzudringen. Sie wurden entwickelt, um die Färbung für 1-6 Wäschen aufrecht zu erhalten. Typischerweise werden hier Azo- und basische Farbstoffe sowie, Azin- und Thiazinderivate eingesetzt. Für die Zusammensetzung der Formulierungen gilt das bei den semipermanenten und permanenten Haarfärbemitteln gesagte. Farbstoffe und andere Inhaltsstoffe von Haarfärbemitteln werden beschrieben in: A. Domsch, Die kosmetischen Präparate, Verlag für Chem. Industrie, 4. Auflage, 1992. Farbstoffe werden beschrieben in: Verordnung über Kosmetische Mittel (Kosmetik Verordnung), Bundesgesetzblatt 1997, Teil I S. 2412, § 3 und Anlage 3 und in European Community (EC) Directive, 76/68/EEC, Annex IV.

Als besonders vorteilhaft für die Verwendung von die erfindungsgemäßen Polyamid-Polysiloxan-Verbindungen enthaltenden Mischungen in kosmetischen Formulierungen wurden die folgenden, die Erfindung jedoch nicht limitierenden Rezepturen gefunden, in denen jeder funktionelle Wirkstoff als einzelne Verbindung oder als Gemisch mehrerer Verbindungen dieser Kategorie auftreten kann.

Eine typische, erfindungsgemäße, die Erfindung jedoch nicht limitierende Shampoo-Formulierung zur Pflege und Konditionierung von Haaren besteht aus folgenden Bestandteilen in Gew.-%, jeweils bezogen auf die Gesamtformulierung:

| | |
|---|---|
| 0,01 - 10% | erfindungsgemäße Polyamid-Polysiloxan-Verbindungen |
| 2 - 15 % | Anionisches Tensid |
| 0 - 10 % | Amphoteres Tensid |
| 0 - 15 % | Nichtionisches Tensid |
| 0 - 10 % | Kationisches Tensid |
| 0 - 10 % | Silikone Konditioniermittel (Co-Adjuvantien) |
| 0 - 10 % | Hilfsstoffe |
| auf 100 % | ergänzt durch Wasser. |

Eine spezielle, die Erfindung jedoch nicht limitierende Shampoo-Formulierung besteht aus folgenden Bestandteilen in Gew.-%:

| | |
|---|---|
| 0.1 - 12 % | erfindungsgemäße Polyamid-Polysiloxan-Verbindungen |
| 1 - 35 % | Natrium oder Ammonium Lauryl- bzw. Laurethsulfat (20 - 30%) |
| 1 - 6 % | Cocoamidopropylbetain (25 - 35%) |
| 0 - 3 % | Guar Hydroxypropyltrimonium Chlorid |
| 0- 5 % | Polyquaternium-10 |
| 0- 12 % | Silikone Konditioniermittel (Co-Adjuvantien) |
| 0.01 - 1% | Dinatrium EDTA |
| 0.01 - 1% | Phenoxyethynol (und) Methylparaben (und) Butylparaben (und) Ethylparaben (und) Propylparaben |
| 0 - 1 % | Parfum (Duftstoff) |
| 0 - 1 % | Farbstoffe |
| 0 - 1 % | Zitronensäure |
| 0 - 2 % | Natriumchlorid |
| auf 100 % | ergänzt durch Wasser. |

Eine typische, erfindungsgemäße, die Erfindung jedoch nicht limitierende Haarspülung zur Pflege und Konditionierung von Haaren besteht aus folgenden Bestandteilen in Gew.-%:

| | |
|---|---|
| 0.1 - 15 % | erfindungsgemäße Polyamid-Polysiloxan-Verbindungen |
| 0 - 10 % | Amphoteres Tensid |
| 0.1 - 15 % | Nichtionisches Tensid |
| 0 - 10 % | Kationisches Tensid |
| 0 - 15 % | Silikone Konditioniermittel (Co-Adjuvantien) |
| 0 - 20 % | Hilfsstoffe |
| auf 100 % | ergänzt durch Wasser. |

Eine spezielle, die Erfindung jedoch nicht limitierende Zusammensetzung einer Haarspülung besteht aus folgenden Bestandteilen in Gew.-%:

| | |
|---|---|
| 0.5 - 15% | erfindungsgemäße Polyamid-Polysiloxan-Verbindungen (als 43.5%-ige Emulsion in Wasser mit nichtionischen Emulgatoren) |
| 0 - 15 % | Silikone Konditioniermittel (Co-Adjuvantien) |
| 0 - 10 % | Cetrimonium Chlorid (25 - 35%) |
| 0 - 3 % | Guar Hydroxypropyltrimonium Chlorid |
| 1 - 10 % | Cetearyl Alkohol |
| 0 - 10 % | Glycerin |
| 0.01 - 1% | Phenoxyethynol (und) Methylparaben (und) |
| | Butylparaben (und) Ethylparaben (und) |
| | Propylparaben |
| 0 - 1 % | Parfum (Duftstoff) |
| 0 - 1 % | Farbstoffe |
| 0 - 1 % | Zitronensäure |
| auf 100 % | ergänzt durch Wasser. |

Eine typische, erfindungsgemäße, die Erfindung jedoch nicht limitierende Haarpflege-Kur zur Pflege und Konditionierung von Haaren besteht aus folgenden Bestandteilen in Gew.-%:

| | |
|---|---|
| 0,4 - 20 % | erfindungsgemäße Polyamid-Polysiloxan-Verbindungen |
| 0 - 15 % | Nichtionisches Tensid |
| 0 - 10 % | Kationisches Tensid |
| 0 - 20 % | Silikone Konditioniermittel (Co-Adjuvantien) |
| 0 - 20 % | Hilfsstoffe |
| auf 100 % | ergänzt durch Wasser. |

Eine spezielle, die Erfindung jedoch nicht limitierende Haarpflege-Kur, besteht aus folgenden Bestandteilen in Gew.-%:

| | |
|---|---|
| 1 - 20 % | erfindungsgemäße Polyamid-Polysiloxan-Verbindungen (als 43.5%-ige Emulsion in Wasser mit nichtionischen Emulgatoren) |
| 0,5 - 10 % | Stearyl Alcohol (und) Steareth-7 (und) Steareth-10 |
| 0 - 20 % | Silikone Konditioniermittel (Co-Adjuvantien) |
| 0 - 10 % | Cetrimonium Chlorid (25 - 35%) |
| 0 - 3 % | Guar Hydroxypropyltrimonium Chlorid |
| 0 - 5 % | Dimethicone |
| 0 - 5 % | Paraffinöl |
| 1 - 10 % | Stearyl Alkohol |
| 0 - 10 % | Glycerin |
| 0.01- 1% | Phenoxyethynol (und) Methylparaben (und) Butylparaben (und) Ethylparaben (und) Propylparaben |
| 0 - 1 % | Parfum (Duftstoff) |
| 0 - 1 % | Farbstoffe |
| 0 - 1 % | Zitronensäure |
| 0 - 2 % | Natriumchlorid |
| auf 100 % | ergänzt durch Wasser. |

Eine ganz spezielle, die Erfindung jedoch nicht limitierende Haarpflege Kur, besteht aus folgenden Bestandteilen in Gew.-%:

| | |
|---|---|
| 2 - 5 % | erfindungsgemäße Polyamid-Polysiloxan-Verbindungen (als 43.5%-ige Emulsion in Wasser mit nichtionischen Emulgatoren) |
| 0 - 5 % | Silikone Konditioniermittel (Co-Adjuvantien) |
| 0 - 2 % | Cetrimonium Chlorid (25 - 35%) |
| 0.5 - 5 % | Glycerin |
| 0.25 - 2.5 % | Propylenglykol |
| 0.05 - 0.2 % | Parfum |
| 0.1 - 0.5 % | Polysorbat 20 |
| auf 100 % | ergänzt durch Wasser. |

Eine typische, erfindungsgemäße, die Erfindung jedoch nicht limitierende die Farbstoffe enthaltende Formulierung zur temporären, semi-permanenten oder permanenten Haarfärbung Pflege und Konditionierung der Haare besteht aus folgenden Bestandteilen in Gew.-%:

| | |
|---|---|
| 0.1 - 10 % | erfindungsgemäße Polyamid-Polysiloxan-Verbindungen |
| 1 - 10 % | Haarfarbstoffvorstufen oder Farbstoffe je nach gewünschter Haarfarbe |
| 0 - 15 % | Anionisches Tensid |
| 0 - 10 % | Amphoteres Tensid |
| 0 - 10 % | Nichtionisches Tensid |
| 0 - 10 % | Kationisches Tensid |
| 0 - 1 % | Natriumsulfit |
| 0 - 5 % | Puffer |
| 0 - 10 % | Silikone Konditioniermittel (Co-Adjuvantien) |
| 0 - 10 % | Hilfsstoffe |
| auf 100 % | Wasser. |

Eine spezielle, erfindungsgemäße, die Erfindung jedoch nicht limitierende Farbcreme für die permanente Haarfärbung besteht aus folgenden Bestandteilen in Gew.-%:

| | |
|---|---|
| 0.1 - 10 % | erfindungsgemäße Polyamid-Polysiloxan-Verbindungen (als 20%-ige Emulsion in Wasser mit nichtionischen Emulgatoren) |
| 1 - 5 % | Haarfarbvorstufen oder Farbstoffe je nach gewünschter Haarfarbe |
| 2 - 15 % | Anionisches Tensid |
| 0 - 10 % | Amphoteres Tensid |
| 0 - 10 % | Nichtionisches Tensid |
| 0 - 10 % | Kationisches Tensid |
| 0.1 - 1 % | Natriumsulfit |
| 0.1 - 5 % | Puffer für pH = 8 - 12 |
| 0 - 10 % | Silikone Konditioniermittel (Co-Adjuvantien) |
| 0 - 10 % auf 100 % | Hilfsstoffe |
| auf 100 % | Wasser. |

Eine spezielle, erfindungsgemäße, die Erfindung jedoch nicht limitierende Farblösung für die permanente Haarfärbung besteht aus folgenden Bestandteilen in Gew.-%:

| | |
|---|---|
| 0.1 - 10 % | erfindungsgemäße Polyamid-Polysiloxan-Verbindungen (als 20%-ige Emulsion in Wasser mit nichtionischen Emulgatoren) |
| 1 - 5 % | Haarfarbvorstufen oder Farbstoffe je nachgewünschter Haarfarbe |
| 0.1 - 1 % | Natriumsulfit |
| 5 - 15 % | Propylenglykol |
| 5 - 15 % | Ammoniak (28%) |
| 10 - 30 % | Ölsäure |
| 5 - 15 % | Isopropanol |
| 10 - 30 % | Alkanolamid |
| 0 - 10 % | Silikone Konditioniermittel (Co-Adjuvantien) |
| auf 100 % | Wasser. |

Eine typische, erfindungsgemäße, die Erfindung jedoch nicht limitierende Entwicklerformulierung für die permanente Haarfärbung besteht aus folgenden Bestandteilen in Gew.-%:

| | |
|---|---|
| 0.1 - 10 % | erfindungsgemäße Polyamid-Polysiloxan-Verbindungen |
| 10 - 30 % | Wasserstoffperoxid (30%) |
| 0 - 15 % | Anionisches Tensid |
| 0 - 10 % | Amphoteres Tensid |
| 0 - 10 % | Nichtionisches Tensid |
| 0 - 10 % | Kationisches Tensid |
| 0 - 5 % | Puffer bzw. Säure für pH = 2 - 6 |
| 0 - 10 % | Silikone-Konditioniermittel (Co-Adjuvantien) |
| 0 - 10 % | Hilfsstoffe |
| auf 100 % | Wasser |

Eine spezielle, erfindungsgemäße, die Erfindung jedoch nicht limitierende Entwickler Creme für eine permanente Haarfärbung besteht aus folgenden Bestandteilen in Gew.-%:

| | |
|---|---|
| 0.1 - 5 % | erfindungsgemäße Polyamid-Polysiloxan-Verbindungen (als 20%-ige Emulsion in Wasser mit nichtionischen Emulgatoren) |
| 10 - 30 % | Wasserstoffperoxid (30%) |
| 0 - 5 % | Silikon-Konditioniermittel (Co-Adjuvantien) |
| 1 - 10 % | Cetearyl Alkohol |
| 0.5 - 5 % | Trideceth-2 Carboxamid MEA |
| 0.5 - 5 % | Ceteareth-30 |
| 0.5 - 5 % | Glycerin |
| 0.05 - 2 % | Pentasodium Pentetate (Pentanatrium Diethylentriaminpentaacetat |
| 0.05 - 2 % | Natriumstannat |
| 0.05 - 2 % | Tetranatriumpyrophosphat |
| auf 100 % | Wasser. |

Es wurde hierbei erkannt, dass sich die erfindungsmäßen Lösungen oder Mischungen vorzugsweise zur Herstellung von kosmetischen Formulierungen eignen, wie für die Behandlung, Konditionierung, Reinigung und/oder Pflege gefärbter oder zu färbender Substrate.

D.h. die mindestens eine erfindungsgemäße Polyamid-Polysiloxan-Verbindung enthaltenden Formulierungen können insbesondere für die Reinigung, Pflege und Konditionierung von faserartigen oder flächigen Substraten eingesetzt werden und wenn diese gefärbt sind und deren Farbeindruck weitestgehend erhalten bleiben soll.

Die mindestens eine erfindungsgemäße Polyamid-Polysiloxan-Verbindung enthaltenden Formulierungen können weiterhin für die Reinigung, Pflege und die Behandlung und die Konditionierung keratinhaltiger Substrate dienen, da sie als Reinigungsmittel für Wolle, zur Wäsche und/oder Erhöhung des Volumens und/oder der Kämmbarkeit und/oder des Glanzes und/oder zur Verminderung des Auswaschens der Farbe von und aus gefärbten oder von gleichzeitig zu färbenden keratinhaltigen Substraten wie z.B. menschlichem und tierischem Haar geeignet sind.

Weiterhin können die mindestens eine erfindungsgemäße Polyamid-Polysiloxan-Verbindung enthaltenden Formulierungen insbesondere für die Reinigung, Pflege und die Behandlung, Reinigung und Pflege keratinhaltiger Fasern bzw. Haare vor, während und/oder nach dem Färbevorgang verwendet werden, da die hiermit formulierten Haarfärbemittel gleichzeitig zur Verbesserung der Weichheit und/oder zur Verminderung der Nass- und Trockenkämmkräfte und/oder zur Erhöhung des Glanzes und/oder zur Erhöhung des Haarvolumens und/oder zur Verminderung des Auswaschens von Farbstoffen von und aus getönten und gefärbten Haaren führen.

### Weichspülerformulierungen

Hinsichtlich der Darrreichungsform ist es einerseits möglich, die erfindungsgemäßen Polyamid-Polysiloxan-Verbindungen in nicht transparente Weichspülerdispersionen oder Weichspüleremulsionen bzw. transparente Microemulsionen oder Lösungen einzuarbeiten.

Typische weitere Komponenten für derartige nicht transparente oder transparente Formulierungen sind:
- quaternäre Ammoniumverbindungen, bevorzugt Alkansäureestereinheiten enthaltende quaternäre Ammoniumverbindungen als Weichmacher,
- organische Lösungsmittel, bevorzugt ein und mehrwertige Alkohole, wie Ethanol, 2-Propanol, Ethylenglykol, 1.2-Propylenglykol, Hexylenglycol, Dipropylenglycol, Ester und Ether von Glycolen und Oligoglykolen, wie Dipropylenglykolmonobutylether, Tripropylenmonomethylether, Diethylenglycoldiacetat, zur Verbesserung der Löslichkeit und Transparenz der Formulierung,
   - Diole und höhere Alkohole längerkettiger Kohlenwasserstoffe, beispielsweise 2,2,4-Trimethyl-1,3-Pentandiol, zur Steigerung der Solubilisierbarkeit der Weich-macherkomponenten,
   - nichtionogene Tenside, bevorzugt Alkoxylate von verzweigten bzw. unverzweigten C8 bis C40 Alkoholen und Fettsäureester von Alkylenoxiden zur Emulsionsstabilisierung bzw. Microemulsionsherstellung
- Parfüms
- Viscositätsregler
- Farbstoffe
- Konservierungsmittel.

Die aufgeführten zusätzlichen Funktionalkomponenten und bevorzugte Vertreter sind beispielsweise aus US 6376455 bekannt.

Andererseits ist es möglich, die erfindungsgemäßen Polysiloxan-Polyamid-Verbindungen im Kontext von Wäscheauffrischersystemen auf feste Träger aufzubringen und diese dann im Wäschetrockner in Kontakt mit aufzufrischenden und/oder weich zu machenden Textilien zu bringen. Geträgerte Wäscheauffrischersysteme und deren Funktionalkomponenten sind beispielsweise aus US 4824582, US 4808086, US 4756850, US 4749596, US 3686025 bekannt.

Typische Komponenten für deratige geträgerte Wäscheauffrischersysteme sind:
- Fettamine bzw. deren Komplexe mit anionischen Tensiden als Konditioniermittel
- quaternäre Ammoniumverbindungen, bevorzugt Alkansäureestereinheiten enthaltende quaternäre Ammoniumverbindungen als Weichmacher
- nichtionogene Weichmacher, beispielsweise auf Basis von Sorbitanestern, Fettalkohlalkoxylaten
- "soil release agents", beispielsweise auf Basis von Celluloseethern, Guar Gum, Terephthalsäureblockcopolymeren.

Das Trägermaterial ist ein schwammartiges oder poröses blattartiges Material, welches eine hinreichende Kapazität zur Aufnahme der Wäscheauffrischerformulierung aufweist. Es kommen "woven"- und "nonwoven"- Materialien zum Einsatz. Es handelt sich um Materialien auf Basis natürlicher oder synthetischer Polymerer, wie Wolle, Baumwolle, Sisal, Leinen, Celluloseestern, Polyvinyl-verbindungen, Polyolefinen, Polyamiden, Polyurethanen, Polyestern.

Die Erfindung betrifft weiterhin reaktive Zusammensetzung, enthaltend mindestens eine Verbindung der Formel (9) 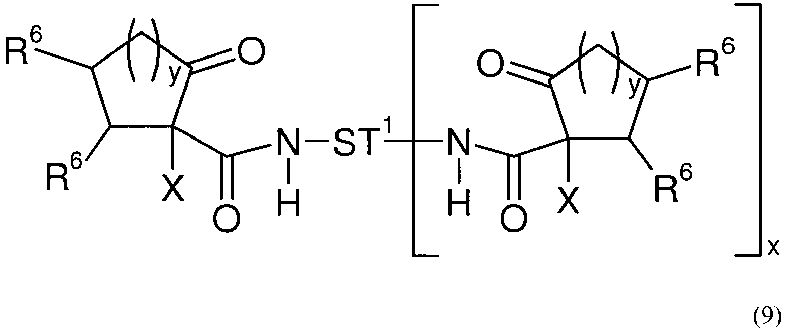 sowie mindestens eine Verbindung der Formel

H-Y-ST²-Y-H,

worin x, y, X, Y, R⁶, ST¹, ST² wie oben definiert sind,
mit der Maßgabe, dass wenigstens einer der Reste ST¹ und/oder ST² einen Polysiloxanrest umfasst.

Weiterhin betrifft die Erfindung reaktive Zusammensetzung, enthaltend mindestens eine Verbindung der Formel (9) 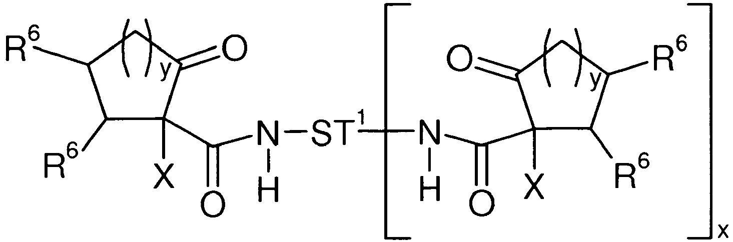 worin x, y, X, R⁶, ST¹ wie oben definiert sind,
mindestens eine Verbindung der Formel

HY-ST³-NR⁵₂,

worin Y, ST³ und R⁵ wie oben definiert sind, und
mindestens eine Verbindung der Formel

Q-ST^{4V}-Q,

worin Q ein zur Alkylierung einer Aminogruppe befähigter Rest ist, und ST^{4V} gemeinsam mit dem aus Q nach der Quaternierungsreaktion hervorgehenden Molekülteil den Rest ST⁴ bildet,
mit der Maßgabe, dass wenigstens einer der Reste ST¹, ST³ und/oder ST⁴ einen Polyorganosiloxanrest umfasst.

Die genannten reaktiven Zusammensetzungen können verwendet werden um gehärtete Zusammensetzung insbesondere durch Erwärmen und/oder Katalysatorzusatz zu härten. Die reaktiven Zusammensetzungen können dabei insbesondere als 1K-(Komponenten)-Zusammensetzung oder weniger bevorzugt als 2K-(Komponenten)-Zusammensetzung zum Einsatz gelangen.

Durch die Härtung der erfindungsgemäßen reaktiven Zusammensetzungen können insbesondere Beschichtungen oder Elastomer-Formkörper hergestellt werden.

Weiterhin betrifft die Erfindung die in den reaktiven Zusammensetzungen anwendbare neue Verbindung der Formel (9) 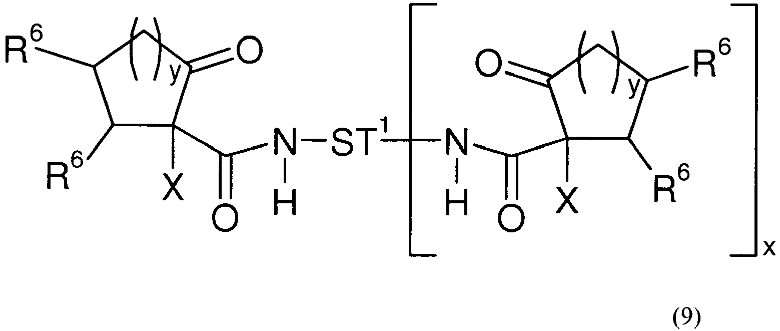 worin x, y, X, R⁶, ST¹ wie oben definiert sind, mit der Maßgabe, dass der Rest ST¹ mindestens einen Polysiloxanrest umfasst.

Durch den Einsatz höherfunktionalisierter Verbindungen (x > 1) erfolgt eine Verzweigung/Vernetzung der Polysiloxan-Polyamid-Verbindungen. Auf diesem Weg können verschiedene anwendungstechnische Parameter, wie z.B. Härte und Elastizität eingestellt werden.

Die vorliegende Erfindung wird durch die folgenden Beispiele weiter veranschaulicht.

### BEISPIELE

### Beispiel 1

### Synthese eines kohlenwasserstoffbasierten CPEE blockierten Intermediats

33 g (0,2 mol) Cyclopentanon-2-carbonsäureethylester (CPEE) und 0,4 g Zink-2-ethylhexanoat werden in 51,5 g Butylacetat unter Rührung bei Raumtemperatur vorgelegt. Eine Mischung aus 22,2 g (0,1 mol) Isophorondiisocyanat (IPDI) in 20 g Butylacetat wird innerhalb 20 Minuten zugetropft. Die Temperatur der Reaktionsmischung steigt auf 32 °C. Anschließend wird der Ansatz für 10 Stunden auf 80 - 90 °C erhitzt. Es wird eine klare hellgelbe Lösung von dem Wesen nach 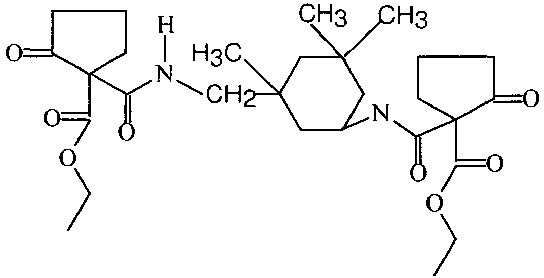 erhalten.

### Beispiel 2

### Umsetzung des CPEE blockierten Intermediats mit einem NH₂-terminierten Siloxan

20 g der Lösung von Beispiel 1 (16,27 mmol Intermediat) werden mit 146g Butylacetat vorgelegt. Portionsweise werden 15,2 g (32.54 mmol NH₂-Gruppen; 2,14 mmol NH₂/g Siloxan) eines α,ω-aminopropyltermimerten Siloxans der Struktur 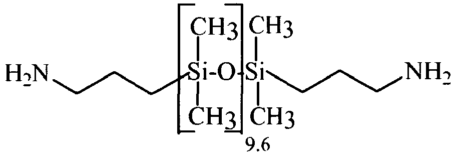 zugetropft. Die Temperatur der Reaktionsmischung steigt auf 45 °C an. Der Ansatz wird anschließend für 7,5 Stunden auf 85-92 °C erhitzt. Es wird eine hochviskose klare gelbe Lösung gewonnen, die ein Polymer mit dem Wesen nach folgender Struktur-einheit enthält

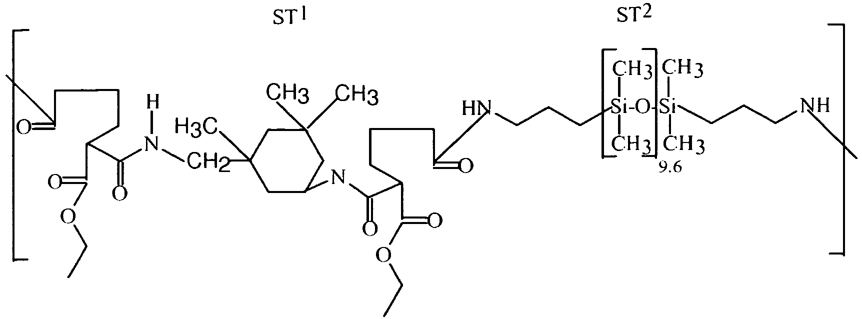

Der NMR-spektroskopisch ermittelte Umsatz des Cyclopentanonringes beträgt 98%. Nach Auftragen einer Probe des Produktes auf eine Polycarbonatplatte und Ablüften des Lösungsmittels wird ein transparenter, zäh-elastischer, nicht klebender Film erhalten.

### Beispiel 3

### Umsetzung des CPEE blockierten Intermediats mit einem NH-terminierten Siloxan

50 g (105 mmol NH₂, 2,14 mmol NH₂/g Siloxan) eines α,ω-aminopropylterminierten Siloxans der Struktur 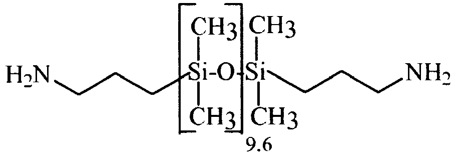 und 12,2 g (105 mmol) Isopropylglycidether werden in 62,2 g 2-Propanol gelöst und für 6,5 Stunden auf Rückflusstemperatur erhitzt. Es wird eine hellgelbe klare Lösung erhalten.

38,7 g (32,54 mmol NH) dieser Lösung werden mit 20 g der Lösung von Beispiel 1 (16,27 mmol Intermediat) für 9 Stunden auf 82-84 °C erhitzt. Es wird eine klare gelbe Lösung gewonnen.

Der NMR-spektroskopisch ermittelte Umsatz des Cyclopentanonringes beträgt 76 %. Nach Auftragen einer Probe des Produktes auf eine Polycarbonatplatte und Ablüften des Lösungsmittels wird ein transparenter, zäh-elastischer, noch leicht klebriger Film erhalten.

### Beispiel 4

### Umsetzung des CPEE blockierten Intermediats mit einem CH₂OH-terminierten Siloxan

35,5 g (16,27 mmol) eines Siloxans der Struktur 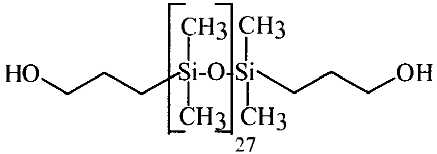 werden mit 20 g der Lösung von Beispiel 1 (16,27 mmol Intermediat), 0,2 g Zink-2-ethylhexanoat und 33 g Butylacetat gemischt und für 6 Stunden auf 120 °C erhitzt. Nach Abkühlung des Ansatzes wird der leicht trübe Ansatz über einen Papierfaltenfilter filtriert. Es wird eine viskose gelbe Lösung gewonnen.

Der NMR-spektroskopisch ermittelte Umsatz des Cyclopentanonringes beträgt 42 %.

### Beispiel 5

### Umsetzung des CPEE blockierten Intermediats mit einem CHOH-terminierten Siloxan

48,8 g (8,13 mmol) eines Siloxans der Struktur 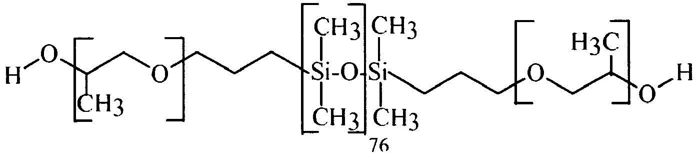 werden mit 10 g der Lösung von Beispiel 1 (8,13 mmol Intermediat), 0,2g Zink-2-ethylhexanoat und 47 g Butylacetat gemischt und für 7,5 Stunden auf 120 °C erhitzt. Nach Abkühlung des Ansatzes wird der leicht trübe Ansatz über einen Papierfaltenfilter filtriert. Es wird eine viskose gelbe Lösung gewonnen. Der NMR-spektroskopisch ermittelte Umsatz des Cyclopentanonringes beträgt 33 %.

Die Beispiele 2 bis 5 zeigen, dass aminoterminierte Siloxane leichter als hydroxylterminierte Siloxane mit einem CPEE blockierten Intermediat reagieren.

Primäre Amine bzw. Alkohole reagieren wiederum leichter als die entsprechenden sekundären Verbindungen. Über diese Abstufungen kann die Reaktivität des Gesamtsystems an spezifische Anforderungen der Verarbeitung angepasst werden.

### Beispiel 6

### Umsetzung eines CPEE blockierten siloxanhaltigen Intermediats mit einer NH₂-terminierten Kohlenwasserstoffstruktur

22,2 g (0,1 mol) IPDI werden in 46 g Methoxypropylacetat bei Raumtemperatur gelöst. Eine Mischung, bestehend aus 46,7 g (0,1 mol NH₂-Grunpen) eines Siloxans der Struktur 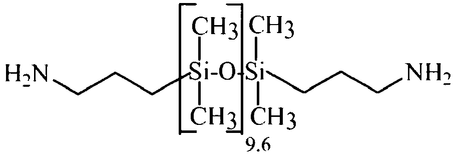 und 23 g Methoxypropylacetat weren innerhalb einer Stunde zugetropft. Die Reaktionstemperatur erreicht 40 °C. Die Reaktionsmischung wird für 1,5 Stunden auf 90 °C erhitzt. Es wird ein isocyanatterminiertes Siloxan mit im Wesentlichen der Struktur 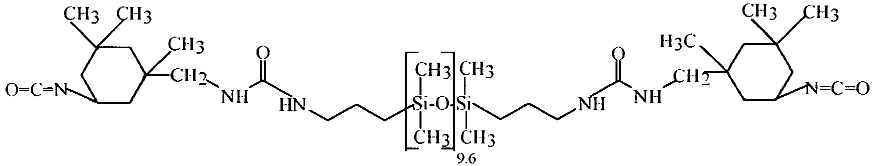 erhalten.

In die Reaktionslösung wird eine Mischung, bestehend aus 15,6 g (0,1 mol) CPEE, 0,2 g Zink-2-ethylhexanoat und 15,6g Methoxypropylacetat dosiert. Der Ansatz wird für 8 Stunden auf 95-105 °C erhitzt.

Abschließend werden 31,65 g (0,05 mol) Jeffamin ED 600 (Huntsman^{®} Corp.), ein NH₂-terminierter EO/PO Polyether der Struktur

H₂NCH(CH₃)CH₂[OCH₂CH(CH₃)]ₐ(OCH₂CH₂)₉[OCH₂CH(CH₃)]_{b}NH₂

mit a+b = 3,6
dosiert und der Gesamtansatz für 8 Stunden auf 100 °C erhitzt. Es wird eine klare, hoch viskose, leicht rötlich gefärbte Produktlösung erhalten.

Nach Auftragen einer Probe des Produktes auf eine Polycarbonatplatte und Ablüften des Lösungsmittels wird ein transparenter, zähelastischer, nicht klebender Film erhalten.

### Beispiel 7

### Synthese eines durch Chloressigsäureestereinheiten substituierten Siloxans

In einem Kolben werden unter N₂ und bei Raumtemperatur 59,5g (449 mmol) CH≡CCH₂OC(O)CH₂Cl und 0,5 g (1 % Pt enthaltend) eines vinylsiloxanmodifizierten Pt-Katalysators vorgelegt. Innerhalb 0,5 Stunden werden 416,5 g (346 mmol SiH, 0,83 mmol SiH/g) eines α,ω SiH funktionalisierten Siloxans zugetropft, wobei die Temperatur auf 130°C erhöht wird. Die Reaktionstemperatur wird für weitere 2,5 Stunden aufrechterhalten. Eine volumetrische Bestimmung des Restgehaltes an SiH ergibt einen Umsatz von 98,5 %.

Nach Entfernung aller bis 130 °C/l mm Hg siedenden Komponenten wird ein Produkt erhalten, welches gemäß NMR Analyse die Stuktur 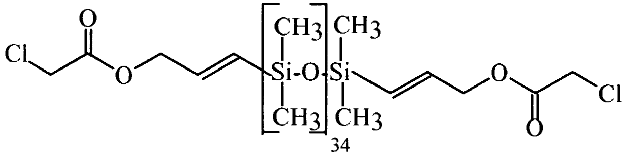 aufweist. Das Verhältnis von Addition in 1-Stellung : 2-Stellung beträgt 78 : 22.

### Beispiel 8.

### Synthese eines kohlenwasserstoffbasierten CPEE blockierten Intermediats

33 g (0,2 mol) Cyclopentanon-2-carbonsäureethylester (CPEE) und 0,4 g Zink-2-ethylhexanoat werden in 51,5 g Butylacetat unter Rührung bei Raumtemperatur vorgelegt. Eine Mischung aus 22,2 g (0,1 mol) Isophorondiisocyanat (IPDI) in 20 g Butylacetat wird innerhalb 20 Minuten zugetropft. Die Temperatur der Reaktionsmischung steigt auf 32 °C. Anschließend wird der Ansatz für 10 Stunden auf 80 - 90 °C erhitzt. Es wird eine klare hellgelbe Lösung von 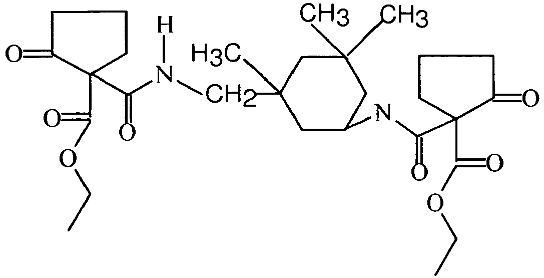 erhalten.

### Beispiel 9

### Umsetzung des CPEE blockierten Intermediats aus Beispiel 8 zu einem Siloxanquat

23 g der Lösung von Beispiel 2 (18,7 mmol Intermediat), 3,8 g (7,4 mmol) (CH₃)₂NCH₂CH₂CH₂NH₂, 0,2 g Zink-2-ethylhexanoat und 54 g 2-Propanol werden bei Raumtemperatur miteinander vermischt, wobei die Temperatur auf 45 °C ansteigt. Die Mischung wird 1 Stunde auf 82-84 °C erhitzt.

Anschließend wird eine Mischung, bestehend aus 54 g 2-Propanol und 53,2 g (18,7 mmol) des Siloxanderivates gemäß Beispiel 1 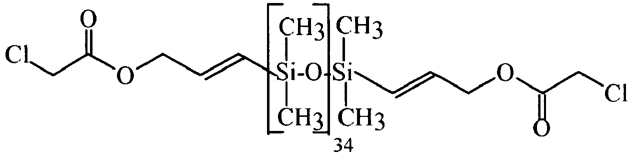 zugesetzt.und die Gesamtmischung für 12 Stunden auf 82-84 °C erhitzt.

Es wird eine viskose, dunkelrote Lösung erhalten, die ein Polymer mit den Strukturelementen 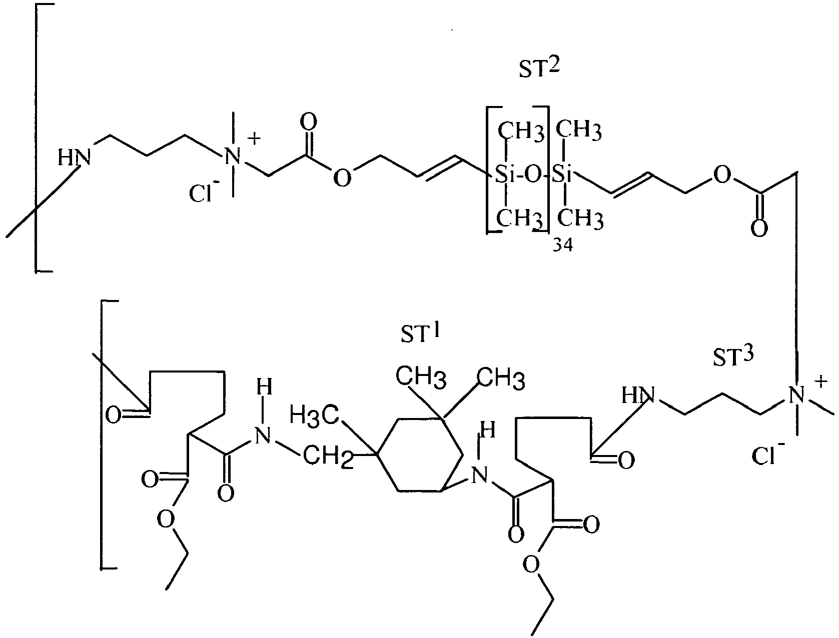 enthält.

## Patentansprüche

1. Polyamid-Polysiloxan-Verbindung, enthaltend Wiederholungseinheiten der Formel (3): 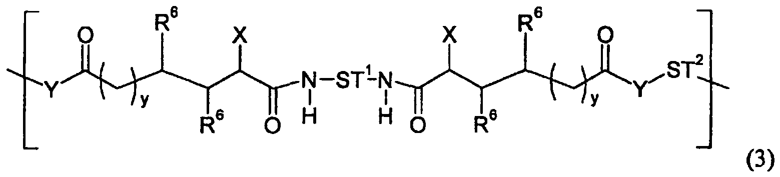 worin
X eine elektronen-ziehende Gruppe ist,
die Reste R⁶ gleich oder verschieden sein können und ausgewählt werden aus Wasserstoff und geradkettigen, cyclischen oder verzweigten, gesättigten, ungesättigten oder aromatischen Kohlenwasserstoffresten mit bis zu 40 Kohlenstoffatomen, die eine oder mehrere Gruppen ausgewählt aus -O-, -C(O) -, NH- und -NR³- enthalten kann, worin
R³ ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)- und NH- enthalten kann, und,
ST¹ ein zwei- bis vierwertiger, geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O)-, NH-, -NR³- und einer Polysiloxaneinheit mit 2 bis 1000 Siliciumatomen enthalten kann, worin R³ wie oben definiert ist,
y von 0 bis 5 ist,
Y ausgewählt wird aus -O-, -S- und -NR²-, worin
R² Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, NH- und NR³- enthalten kann, worin R³ wie oben definiert ist,
ST² ein geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O)-, -NH-,
-NR³-, 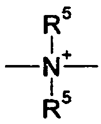 und einer Polysiloxaneinheit mit 2 bis 1000 Siliciumatomen enthalten kann, worin
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NH- enthalten kann, oder R⁵ ein zweiwertiger Rest ist, der cyclische Strukturen innerhalb des Restes ST² ausbildet,
oder Y Stickstoff ist und zusammen mit ST² eine heterocyclische Struktur bildet,
mit der Maßgabe, dass wenigstens einer der Reste ST¹ und/oder ST² einen Polysiloxanrest umfasst,
oder Säureadditionsverbindungen und/oder Salze davon.

2. Polyamid-Polysiloxan-Verbindung nach Anspruch 1, enthaltend mindestens einen Polysiloxan-Strukturelement der Formel (2): 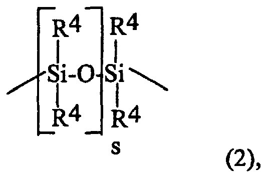 worin
R⁴ ein geradkettiger, cyclischer oder verzweigter, gesättigter, ungesättigter oder aromatischer Kohlenwasserstoffrest mit bis zu 20 Kohlenstofffatomen ist, und
s= 1 bis 999 ist.

3. Polyamid-Polysiloxan-Verbindung nach einem der Ansprüche 1 bis 2, worin X einen Ester-Rest der Formel -C(O)-O-R¹ darstellt, worin R¹ wie oben defniert ist.

4. Polyamid-Polysiloxan-Verbindung nach einem der Ansprüche 1 bis 3, **dadurch gekennzeichnet, dass** sie Wiederholungseinheiten der folgenden Formeln enthalten: 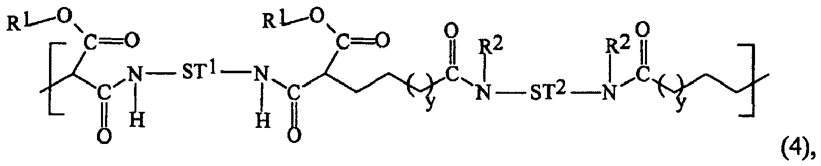 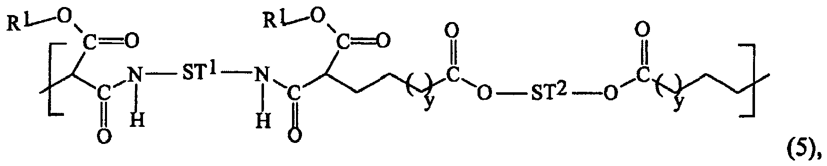 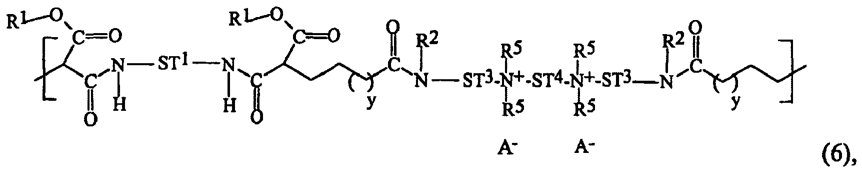 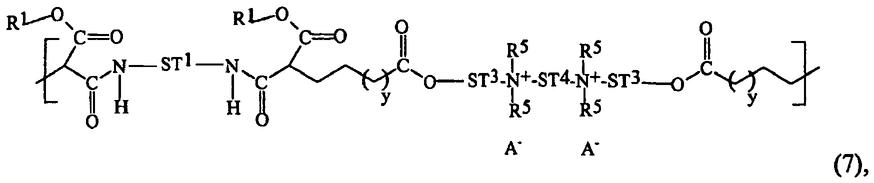 worin R¹, ST¹, ST², R², R⁵, y wie oben defniert sind,
ST³ ein geradkettiger, cyclischer oder verzweigter, gesättigter, ungesättigter oder aromatischer Kohlenwasserstoffrest mit 2 bis 100 Kohlenstoffatomen ist, der einen oder mehrere Gruppen ausgewählt aus -O-, -C(O)-, NH-, -NR³- enthalten kann, und
ST⁴ ein geradkettiger, cyclischer oder verzweigter, gesättigter, ungesättigter oder aromatischer Kohlenwasserstoffrest mit bis zu 1000 Kohlenstoffatomen ist, der eine oder mehrere Gruppen, ausgewählt aus -O-, -C(O), NH-, -NR³- und einer Polysiloxaneinheit mit 2 bis 1000 Siliciumatomen enthalten kann, und
A⁻ ein anorganisches oder organisches Anion ist.

5. Polyamid-Polysiloxan-Verbindung nach einem der Ansprüche 1 bis 4, worin eine oder mehrere oder alle der folgenden bevorzugten Definitionen gelten:
ST¹ ist ein zweiwertiger geradkettiger, cyclischer oder verzweigter, mehrwertiger, gesättigter, ungesättigter oder aromatischer Kohlenwasserstoffrest mit bis zu 200 Kohlenstoffatomen, der eine oder mehrere Gruppen, ausgewählt aus -O-, -C(O)-, -NH-, -NR³- und einer Polysiloxaneinheit mit 2 bis 200 Siliciumatomen enthalten kann,
ST² ist ein zweiwertiger geradkettiger, cyclischer oder verzweigter, mehrwertiger, gesättigter, ungesättigter oder aromatischer Kohlenwasserstoffrest mit bis zu 200 Kohlenstoffatomen, der eine oder mehrere Gruppen, ausgewählt aus -O-, -C(O)-, -NH-, -NR³-, 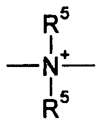 und einer Polysiloxaneinheit mit 2 bis 200 Siliciumatomen enthalten kann,
R² ist H oder ein geradkettiger, cyclischer oder verzweigter, gesättigter, ungesättigter oder aromatischer Kohlenwasserstoffrest mit bis zu 10 Kohlenstoffatomen, der eine oder mehrere Gruppen, ausgewählt aus -O-, -C(O)-, -NH- und -NR³- enthalten kann,
y ist 0 bis 3,
ST⁴ ist ein zweiwertiger, geradkettiger, cyclischer oder verzweigter, mehrwertiger, gesättigter, ungesättigter oder aromatischer Kohlenwasserstoffrest mit bis zu 200 Kohlenstoffatomen, der eine oder mehrere Gruppen, ausgewählt aus -O-, -C(O)-, NH-, NR³- und einer Polysiloxaneinheit mit 2 bis 200 Siliciumatomen enthalten kann,
ST³ ist ein geradkettiger, cyclischer oder verzweigter, mehrwertiger gesättigter, ungesättigter oder aromatischer Kohlenwasserstoffrest mit 2 bis 20 Kohlenstoffatomen, der einen oder mehrere Gruppen ausgewählt aus -O-, -C(O)-, NH-, NR³- enthalten kann,
R³ ist ein geradkettiger, cyclischer oder verzweigter, gesättigter, ungesättigter oder aromatischer Kohlenwasserstoffrest mit bis zu 10 Kohlenstoffatomen, der einen oder mehrere Gruppen ausgewählt aus -O-, -C(O)- und -NH- enthalten kann,
R⁴ ein geradkettiger, cyclischer oder verzweigter, gesättigter, ungesättigter oder aromatischer Kohlenwasserstoffrest mit bis zu 9 Kohlenstofffatomen ist,
s 1 bis 199 ist,
R⁵ ist ein geradkettiger, cyclischer oder verzweigter, gesättigter, ungesättigter oder aromatischer Kohlenwasserstoffrest mit bis zu 25 Kohlenstoffatomen, der eine oder mehrere Gruppen, ausgewählt aus -O-, -C(O)- und -NH- enthalten kann, oder R⁵ ist ein zweiwertiger Rest, der cyclische Strukturen innerhalb des Restes ST² ausbildet,
R⁶ Wasserstoff ist,
A- wird ausgewählt aus Halogenid, wie Chlorid oder Bromid, Sulfat, Phosphat, Carboxylat, Alkylsulfat und Sulfonat.

6. Verfahren zur Herstellung der Polyamid-Polysiloxan-Verbindung nach einem der Ansprüche 1 bis 5, welches die Umsetzung einer Verbindung der Formel (9) 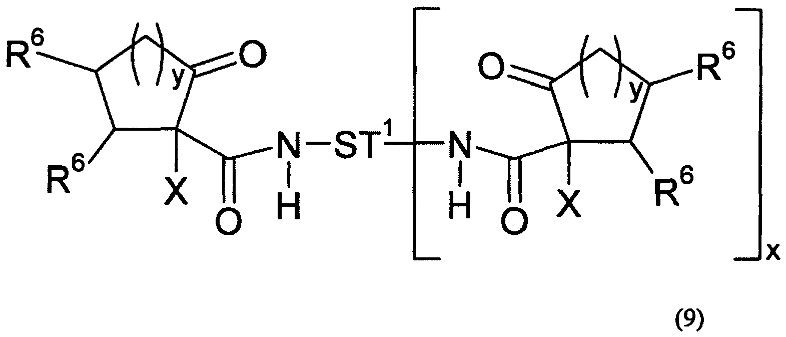 mit einer Verbindung der Formel H-Y-ST²-Y-H umfasst,
worin x, y, X, Y, R⁶, ST¹, ST² wie oben definiert sind, mit der Maßgabe, dass wenigstens einer der Reste ST¹ und/oder ST² einen Polysiloxanrest umfasst.

7. Verfahren zur Herstellung der Polyamid-Polysiloxan-Verbindung nach einem der Ansprüche 1 bis 5, welches die Umsetzung einer Verbindung der Formel 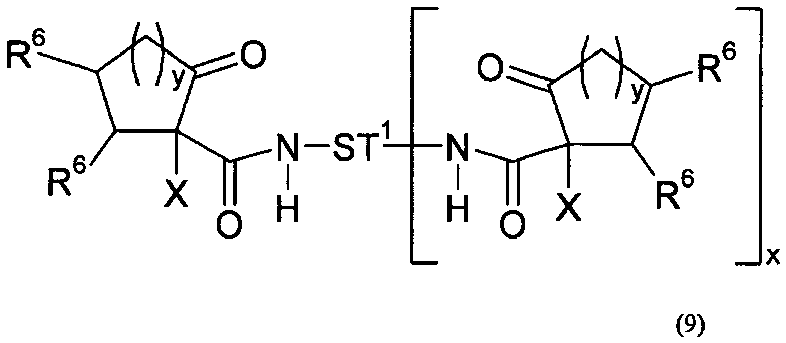 worin x, y, X, R⁶, ST¹ wie oben definiert sind,
mit einer Verbindung der Formel
HY²-ST³-NR⁵₂,
worin ST³, Y² und R⁵ wie oben definiert sind,
und einer Verbindung der Formel
Q-ST^{4V}-Q,
worin
Q ein zur Alkylierung einer Aminogruppe befähigter Rest ist, und ST^{4V} gemeinsam mit dem aus Q nach der Quaternierungsreaktion hervorgehenden Molekülteil den Rest ST⁴ bildet,
mit der Maßgabe, dass wenigstens einer der Reste ST¹, ST³ und/oder ST⁴ einen Polyorganosiloxanrest umfasst.

8. Verwendung der Polyamid-Polysiloxan-Verbindung nach einem der Ansprüche 1 bis 5 zur Herstellung von Beschichtungen, Mitteln zur Oberflächenmodifizierung, Elastomeren, Duromeren, Klebstoffen, Primem für Metall- und Kunststoffoberflächen, Polymeradditiven, Waschmitteladditiven, rheologischen Mitteln, kosmetischen Mitteln, Fasermodifizierungsmitteln.

9. Waschmittelformulierungen, kosmetische Formulierungen, Faserbehandlungsformulierungen, enthaltend mindestens eine Polyamid-Polysiloxan-Verbindung nach einem der Ansprüche 1 bis 5.

10. Reaktive Zusammensetzung, enthaltend mindestens eine Verbindung der Formel 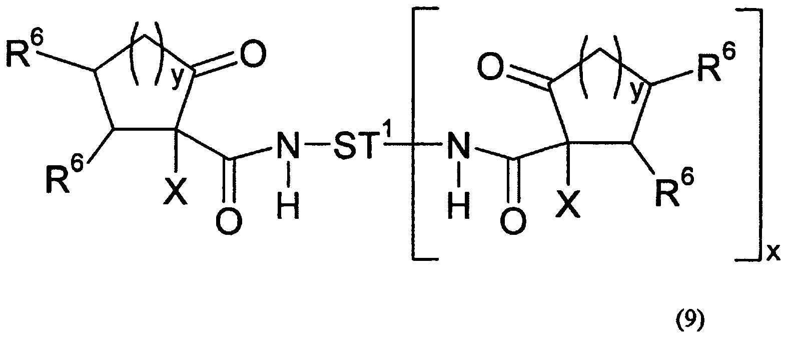 sowie mindestens eine Verbindung der Formel
H-Y-ST²-Y-H,
worin x, y, X, Y, R⁶, ST¹, ST² wie oben definiert sind,
mit der Maßgabe, dass wenigstens einer der Reste ST¹ und/oder ST² einen Polysiloxanrest umfasst.

11. Reaktive Zusammensetzung, enthaltend mindestens eine Verbindung der Formel 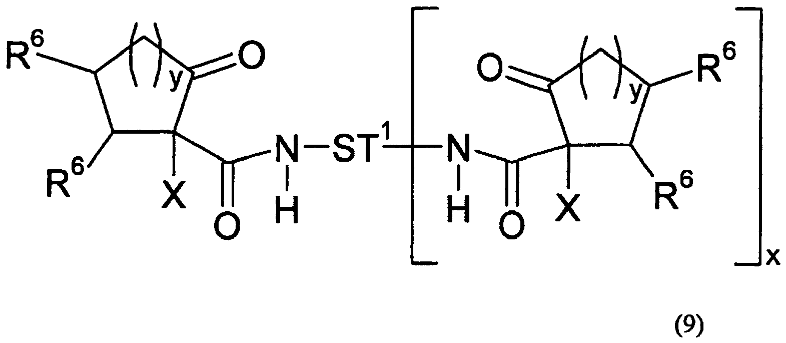 worin x, y, X, R⁶, ST¹ wie oben definiert sind,
mindestens eine Verbindung der Formel
HY-ST³-NR⁵₂,
worin Y, ST³ und R⁵ wie oben definiert sind, und
mindestens eine Verbindung der Formel
Q-ST^{4V}-Q,
worin
Q ein zur Alkylierung einer Aminogruppe befähigter Rest ist, und ST^{4v} gemeinsam mit dem aus Q nach der Quaternierungsreaktion hervorgehenden Molekülteil den Rest ST⁴ bildet,
mit der Maßgabe, dass wenigstens einer der Reste ST¹, ST³ und/oder ST⁴ einen Polyorganosiloxanrest umfasst.

12. Gehärtete Zusammensetzung, erhältlich durch Härten der reaktiven Zusammensetzungen nach den Ansprüchen 10 oder 11.

13. Verbindung der Formel 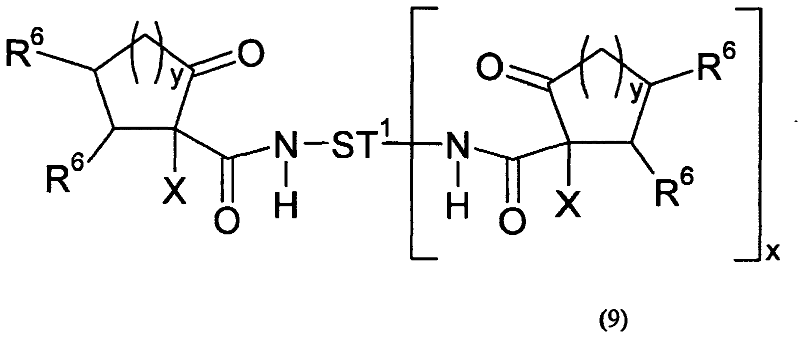 worin x, y, X, R⁶, ST¹ wie oben definiert sind, mit der Maßgabe, dass der Rest ST¹ mindestens einen Polysiloxanrest umfasst.

## Claims

1. A polyamide-polysiloxane compound comprising repeating units of the formula (3) : 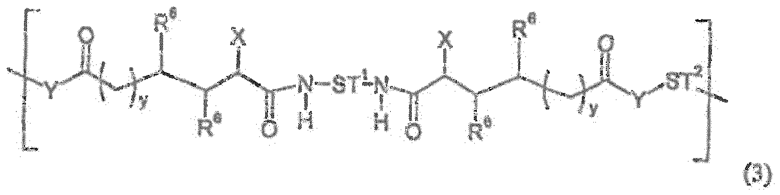 wherein
X is an electon attracting group,
the residues R⁶ can be the same or different and are selected from hydrogen and straight-chain, cyclic or branched, saturated or unsaturated or aromatic hydrocarbon residues having up to 40 carbon atoms, which can contain one or more groups selected from -O-, -C(O)-, -NH- and -NR³-, wherein
R³ is a straight-chain, cyclic or branched, saturated or unsaturated or aromatic hydrocarbon residue having up to 40 carbon atoms, which can contain one or more groups selected from -O-, -C(O)- and -NH-, and
ST¹ is a bivalent to tetravalent, straight-chain, cyclic or branched, saturated or unsaturated or aromatic hydrocarbon residue having up to 40 carbon atoms, which can contain one or more groups selected from -O-, -C(O)- and -NH-, -NR³- and a polysiloxane unit having from 2 to 1000 silicium atoms, wherein R³ is as defined above,
y is from 0 to 5,
Y is selected from-O-, -S- and -NR²-, wherein
R² is hydrogen or a straight-chain, cyclic or branched, saturated or unsaturated or aromatic hydrocarbon residue having up to 40 carbon atoms, which can contain one or more groups selected from -0-, -C(O)- and -NH- and -NR³-, wherein R³ is as defined above,
ST² is a straight-chain, cyclic or branched, saturated or unsaturated or aromatic hydrocarbon residue having up to 1000 carbon atoms that can contain one or more groups selected from -O-, -C(O)-, -NH-, -NR³-, 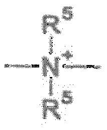 and a polysiloxane unit having from 2 to 1000 silicium atoms, wherein
R⁵ is a straight-chain, cyclic or branched, saturated or unsaturated or aromatic hydrocarbon residue having up to 100 carbon atoms, which can contain one or more groups selected from -O-, -C(O)- and -NH- and -NR³-, or R⁵ is a divalent residue which forms cyclic structures within the residue ST²,
or Y is nitrogen, and together with ST² forms a heterocyclic structure,
provided that at least one of the residues ST¹ and/or ST² comprises a polysiloxane residue,
or acid addition compounds and/or salts thereof.

2. The polyamide-polysiloxane compound according to claim 1, containing at least one structural polysiloxane element of the formula (2): 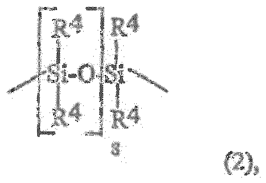 wherein
R⁴ is a straight-chain, cyclic or branched, saturated or unsaturated or aromatic hydrocarbon residue having up to 20 carbon atoms, and
s = 1 to 999.

3. The polyamide-polysiloxane compound according to one of the claims 1 to 2, wherein X represents an ester residue of the formula -C(O)-O-R¹, wherein R¹ is as defined above.

4. The polyamide-polysiloxane compound according to one of the claims 1 to 3, **characterized in that** it comprises repeating units of the following formula: 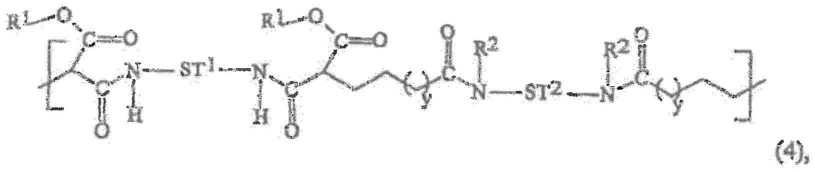 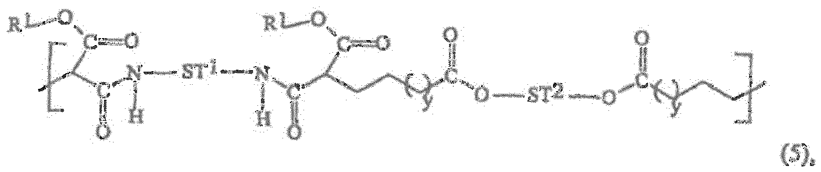 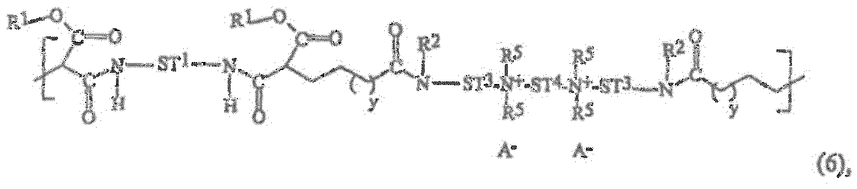 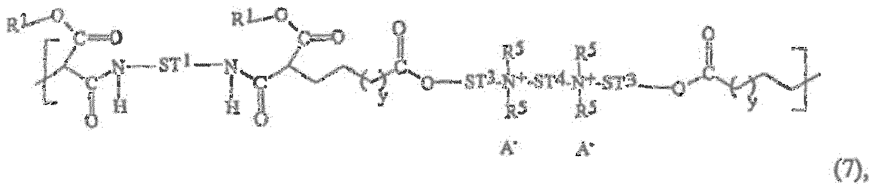 wherein R¹, ST¹, ST², R², y are as defined above,
ST³ is a straight-chain, cyclic or branched, saturated or unsaturated or aromatic hydrocarbon residue having from 2 to 100 carbon atoms, which can contain one or more groups selected from -O-, -C(O)- , -NH-, -NR³-, and
ST⁴ is a straight-chain, cyclic or branched, saturated or unsaturated or aromatic hydrocarbon residue having up to 1000 carbon atoms, which can contain one or more groups selected from -O-, -C(O)-, -NH-, -NR³- and a polysiloxane unit having from 2 to 1000 silicium atoms, and
A is an inorganic or organic anion.

5. The polyamide-polysiloxane compound according to one of the claims 1 to 4, wherein one or more or all of the following preferred definitions apply:
ST¹ is a divalent, straight-chain, cyclic or branched, saturated or unsaturated or aromatic hydrocarbon residue having up to 200 carbon atoms, which can contain one or more groups selected from -O-, -C(O)- and -NH-, -NR³- and a polysiloxane unit having from 2 to 200 silicium atoms,
ST² is a divalent, straight-chain, cyclic or branched, saturated or unsaturated or aromatic hydrocarbon residue having up to 200 carbon atoms, which can contain one or more groups selected from -O-, -C(O)- and -NH-, -NR³-, 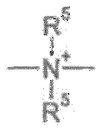 and a polysiloxane unit having from 2 to 200 silicium atoms,
R² is H or a straight-chain, cyclic or branched, saturated or unsaturated or aromatic hydrocarbon residue having up to 10 carbon atoms, which can contain one or more groups selected from -O-, -C(O)-, -NH- and -NR³- and a polysiloxane unit having from 2 to 200 silicium atoms,
y is 0 to 3,
ST⁴ is a straight-chain, cyclic or branched, saturated or unsaturated or aromatic hydrocarbon residue having up to 200 carbon atoms, which can contain one or more groups selected from -O-, -C(O)-, -NH-, -NR³- and a polysiloxane unit having from 2 to 200 silicium atoms,
ST³ is a straight-chain, cyclic or branched, saturated or unsaturated or aromatic hydrocarbon residue having from 2 to 20 carbon atoms, which can contain one or more groups selected from -O-, -C(O)-, -NH-, -NR³-,
R³ is H or a straight-chain, cyclic or branched, saturated or unsaturated or aromatic hydrocarbon residue having up to 10 carbon atoms, which can contain one or more groups selected from -O-, -C(O)- and -NH-,
R⁴ is H or a straight-chain, cyclic or branched, saturated or unsaturated or aromatic hydrocarbon residue having up to 9 carbon atoms,
s is 1 to 199,
R⁵ is H or a straight-chain, cyclic or branched, saturated or unsaturated or aromatic hydrocarbon residue having up to 25 carbon atoms, which can contain one or more groups selected from -O-, -C(O)- and -NH-, or R⁵ is a divalent residue that forms cyclic structures within the residue ST²,
R⁶ is hydrogen,
A⁻ is selected from halogenide, such as chloride, or bromide, sulfate, phosphate, carboxylate, alkyl sulfate and sulfonate.

6. A process for the production of polyamide-polysiloxane compounds according to one of the claims 1 to 5, which comprises reacting a compound of the formula (9) 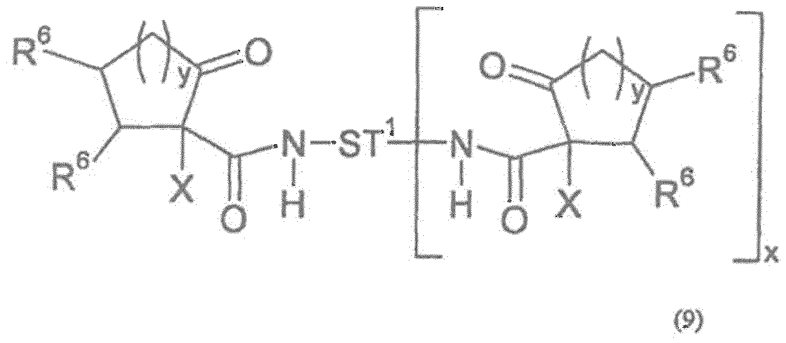 with a compound of the formula H-Y-ST²-Y-H,
wherein x, y, X, Y, R⁶, ST¹, ST² are as defined above, provided that at least one of the residues ST¹ and/or ST² comprise a polysiloxane residue.

7. The process for the production of polyamide-polysiloxane compounds according to one of the claims 1 to 5, which comprises reacting a compound of the formula 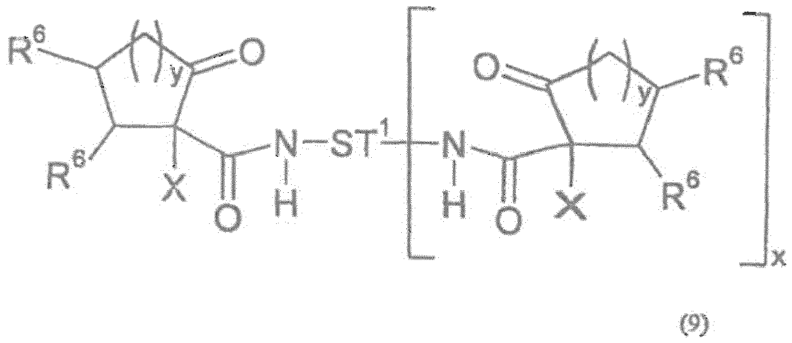 wherein x, y, X, R⁶, ST¹ are as defined above,
with a compound of the formula
HY²-ST³-NR⁵₂,
wherein ST³, Y² and R⁵ are as defined above,
and a compound of the formula
Q-ST^{4v}-Q,
wherein
Q is a residue capable of providing alkylation of an amino group, and ST^{4V} together with the portion of the molecule deriving from Q following quaternisation reaction forms the residue ST⁴,
provided that at least one of the residues ST¹, ST³ and/or ST⁴ include a polyorganosiloxane residue.

8. Use of the polyamide-polysiloxane compound according to one of the claims 1 to 5 for the production of coatings, surface modifiers, elastomes, duromers, adhesives, primers for metal or plastic surfaces, des polymer additives, detergent additives, rheology agents, cosmetic agents, fiber modifying agents.

9. Detergent formulations, cosmetic formulations, fiber treating formulations containg at least a polyamide-polysiloxane compound according to one of the claims 1 to 5.

10. A reactive composition containing at least a compound of the formula 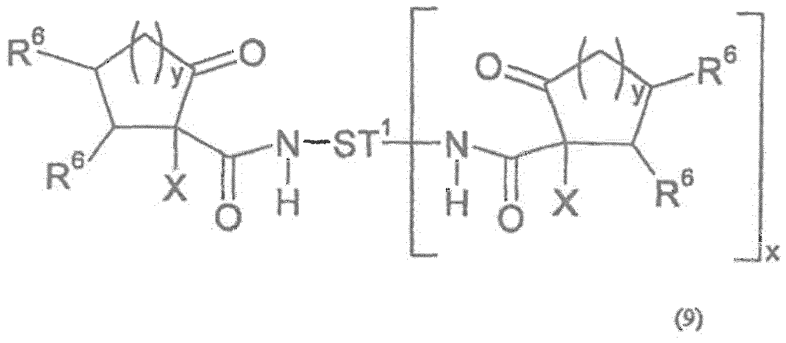 as well as a compound of the formula
H-Y-ST²-Y-H,
wherein x, y, X, Y, R⁶, ST¹, ST² are as defined above,
provided that at least one of the residues ST¹ and/or ST² include a polysiloxane residue.

11. A reactive composition containing at least a compound of the formula 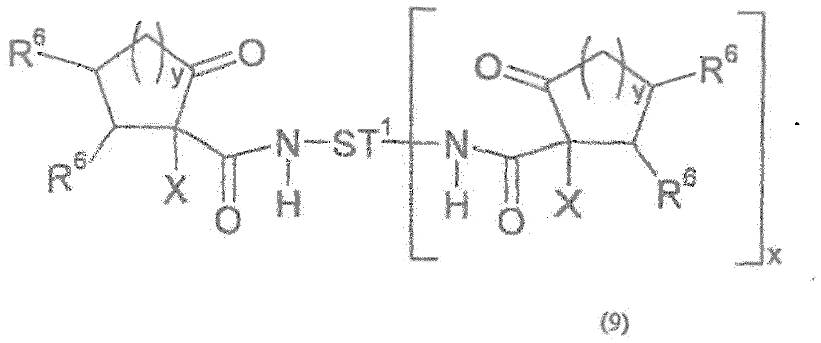 wherein x, y, X, R⁶, ST¹ are as defined above,
at least a compound of the formula
HY-ST³-NR⁵₂,
wherein Y, ST³ and R⁵ are as defined above, and
at least a compound of the formula
Q-ST^{4V}-Q,
wherein Q is a residue capable of providing alkylation of an amino group, and ST⁴ together with the portion of the molecule derived from Q following quaternisation reaction formes the residue ST⁴,
provided that at least one of the residues ST¹, ST³ and/or ST⁴ include a polyorganosiloxane residue.

12. A hardened composition available by way of hardening the composition according to one of the claims 10 or 11.

13. Compound of the formula 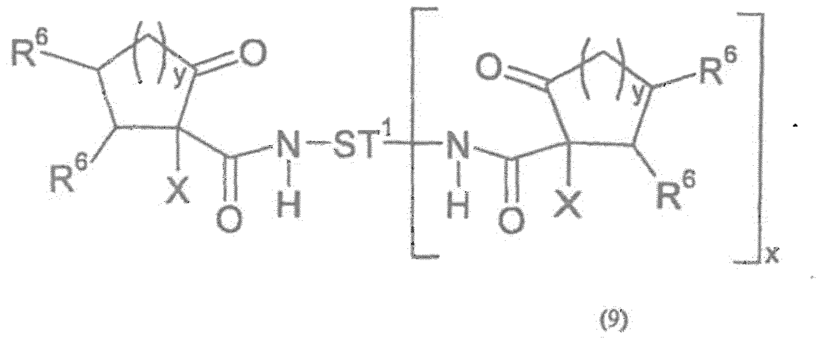 wherein x, y, X, R⁶, ST¹ are as defined above, provided that the residue ST¹ includes at least a polysiloxane residue.

## Revendications

1. Composé de polyamide-polysiloxane comprenant des unités répétitves de la formule (3) : 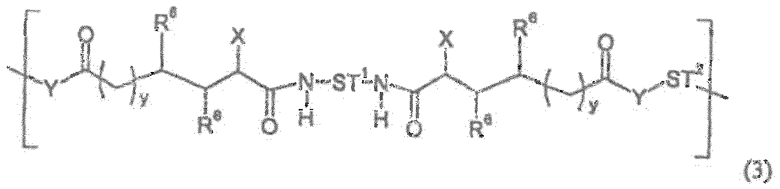 dans lequel
X est un groupe attracteur d'électrons,
les résidus R⁶ peuvent être égaux ou différents et sont sélectionnés parmi l'hydrogène et des résidus hydrocarbonés à chaîne droite, cycliques ou ramifiés, saturés, insaturés ou aromatiques présentant jusqu'à 40 atomes de carbone, qui peut contenir un ou plusieurs groupes sélectionnés parmi -O-, -C(O)-, -NH- et -NR³-, dans lequel
R³ est un résidu hydrocarboné à chaîne droite, cyclique ou ramifié, saturé, insaturés ou aromatique présentant jusqu'à 40 atomes de carbone, qui peut contenir un ou plusieurs groupes sélectionnés parmi -O-, -C(O)- et -NH-, et
ST¹ est un résidu hydrocarboné bi- jusqu'à tétravalent, à chaîne droite, cyclique ou ramifié, saturé, insaturés ou aromatique présentant jusqu'à 40 atomes de carbone, qui peut contenir un ou plusieurs groupes sélectionnés parmi -O-, -C(O)- et -NH-, -NR³- et une unité de polysiloxane présentant 2 jusquà 1000 atomes de silicium, dans lequel R³ est tel que défini là-dessus,
y vaut de 0 à 5,
Y est sélectionné parmi -O-, -S- et -NR²-, dans lequel
R² est l'hydrogène ou un résidu hydrocarboné à chaîne droite, cyclique ou ramifié, saturé, insaturés ou aromatique présentant jusqu'à 40 atomes de carbone, qui peut contenir un ou plusieurs groupes sélectionnés parmi -O-, -C(O)- et -NH- et -NR³-, dans lequel R³ est tel que défini là-dessus,
ST² est un résidu hydrocarboné à chaîne droite, cyclique ou ramifié, saturé, insaturés ou aromatique présentant jusqu'à 1000 atomes de carbone, qui peut contenir un ou plusieurs groupes sélectionnés parmi -O-, -C(O)-, -NH-, -NR³-, 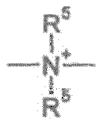 et une unité de polysiloxane présentant 2 jusquà 1000 atomes de silicium, dans lequel
R⁵ est un résidu hydrocarboné à chaîne droite, cyclique ou ramifié, saturé, insaturés ou aromatique présentant jusqu'à 100 atomes de carbone, qui peut contenir un ou plusieurs groupes sélectionnés parmi -O-, -C(O)- et -NH- et -NR³-, ou R⁵ est un résidu bivalent qui forme des structurrs cycliques au sein du residu ST²,
ou Y est l'azote et ensemble avec ST² forme une structure héterocyclique,
à condition que au moins un des résidus ST¹ et/ou ST² comprenne un residu de polysiloxane,
ou des composés d'addition d'acide et/ou des sels de ceux-ci.

2. Composé de polyamide-polysiloxane selon la revendication 1, contenant au moins un élement structurel de polysiloxane de la formule (2) : 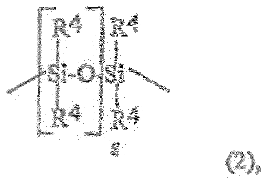 dans lequel
R⁴ est un résidu hydrocarboné à chaîne droite, cyclique ou ramifié, saturé, insaturés ou aromatique présentant jusqu'à 20 atomes de carbone, et
s = 1 à 999.

3. Composé de polyamide-polysiloxane selon l'une des revendications 1 à 2, dans lequel X représente un résidu d'ester de la formule -C(O)-O-R¹, dans lequel R¹ est tel que défini là-dessus.

4. Composé de polyamide-polysiloxane selon l'une des revendications 1 à 3, characerisé par le fait quil comprend des untiés répétitives de le formule suivante : 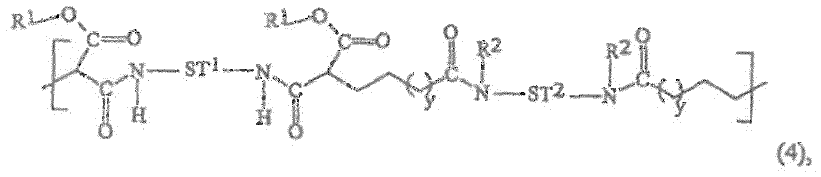 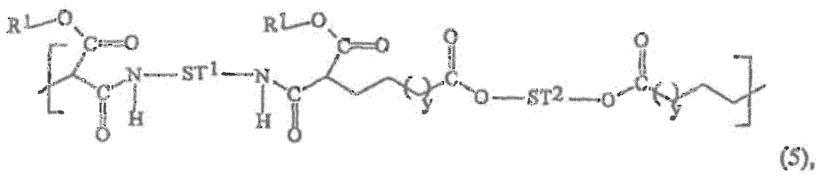 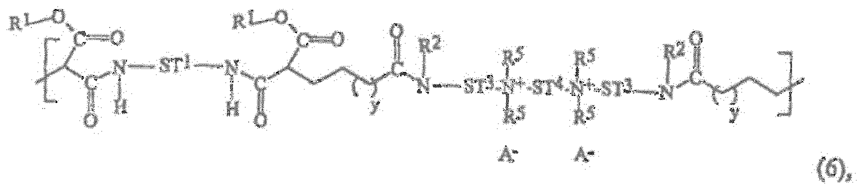 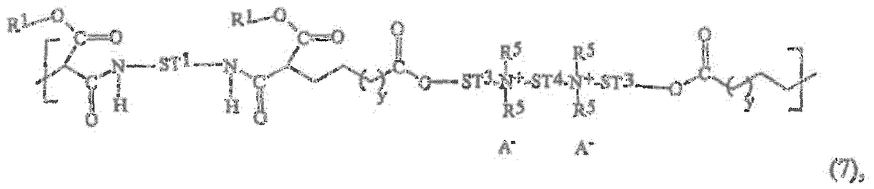 dans lequel R¹, ST¹, ST², R², y sont tel que défini là-dessus,
ST³ est un résidu hydrocarboné à chaîne droite, cyclique ou ramifié, saturé, insaturés ou aromatique présentant 2 jusqu'à 100 atomes de carbone, qui peut contenir un ou plusieurs groupes sélectionnés parmi -O-, -C(O)- , -NH-, -NR³-, et
ST⁴ est un résidu hydrocarboné à chaîne droite, cyclique ou ramifié, saturé, insaturés ou aromatique présentant jusqu'à 1000 atomes de carbone, qui peut contenir un ou plusieurs groupes sélectionnés parmi -O-, -C(O)-, -NH-, -NR³- et une unité de polysiloxane présentant 2 jusquà 1000 atomes de silicium, et
A est un anion anorganique ou organique.

5. Composé de polyamide-polysiloxane selon l'une des revendications 1 à 4, dans lequel une ou plusieurs ou toutes les définitions préferées suivantes valent :
ST¹ est un résidu hydrocarboné bivalent à chaîne droite, cyclique ou ramifié, saturé, insaturés ou aromatique présentant jusqu'à 200 atomes de carbone, qui peut contenir un ou plusieurs groupes sélectionnés parmi -O-, -C(O)- et -NH-, -NR³- et une unité de polysiloxane présentant 2 jusquà 200 atomes de silicium,
ST² est un résidu hydrocarboné bivalent à chaîne droite, cyclique ou ramifié, saturé, insaturés ou aromatique présentant jusqu'à 200 atomes de carbone, qui peut contenir un ou plusieurs groupes sélectionnés parmi -O-, -C(O)- et -NH-, -NR³-, 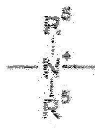 et une unité de polysiloxane présentant 2 jusquà 200 atomes de silicium,
R² est H ou un résidu hydrocarboné à chaîne droite, cyclique ou ramifié, saturé, insaturés ou aromatique présentant jusqu'à 10 atomes de carbone, qui peut contenir un ou plusieurs groupes sélectionnés parmi -O-, -C(O)-, -NH- et -NR³- et une unité de polysiloxane présentant 2 jusquà 200 atomes de silicium,
y vaut 0 à 3,
ST⁴ est un résidu hydrocarboné à chaîne droite, cyclique ou ramifié, saturé, insaturés ou aromatique présentant jusqu'à 200 atomes de carbone, qui peut contenir un ou plusieurs groupes sélectionnés parmi -O-, -C(O)-, -NH-, -NR³- et une unité de polysiloxane présentant 2 jusquà 200 atomes de silicium,
ST³ est un résidu hydrocarboné à chaîne droite, cyclique ou ramifié, saturé, insaturés ou aromatique présentant 2 jusqu'à 20 atomes de carbone, qui peut contenir un ou plusieurs groupes sélectionnés parmi -O-, -C(O)-, -NH-, -NR³-,
R³ est H ou un résidu hydrocarboné à chaîne droite, cyclique ou ramifié, saturé, insaturés ou aromatique présentant jusqu'à 10 atomes de carbone, qui peut contenir un ou plusieurs groupes sélectionnés parmi -O-, -C(O)- et -NH-,
R⁴ est H ou un résidu hydrocarboné à chaîne droite, cyclique ou ramifié, saturé, insaturés ou aromatique présentant jusqu'à 9 atomes de carbone,
s vaut 1 à 199,
R⁵ est H ou un résidu hydrocarboné à chaîne droite, cyclique ou ramifié, saturé, insaturés ou aromatique présentant jusqu'à 25 atomes de carbone, qui peut contenir un ou plusieurs groupes sélectionnés parmi -O-, -C(O)- et -NH-, ou R⁵ est un résidu bivalent, qui forme des structures cyclique au sein de résidu ST²,
R⁶ est l'hydrogène,
A⁻ est séléctionné parmi halogénure, tel que chlorure ou bromure, sulfate, phosphate, carboxylate, alkylesulfate et sulfonate.

6. Procédé pour la production des composés de polyamide-polysiloxane selon l'une des revendications 1 à 5, qui comprend la réaction d'un composé de la formule (9) 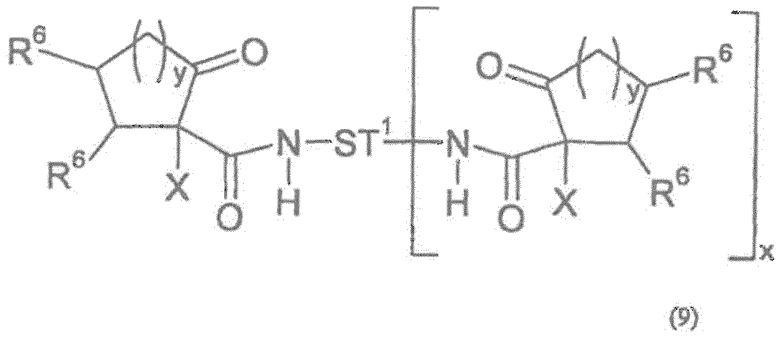 avec un composé de la formule H-Y-ST²-Y-H,
dans lequel x, y, X, Y, R⁶, ST¹, ST² sont tel que défini là-dessus, à condition que au moins un des résidus ST¹ et/ou ST² comprenne un résidu de polysiloxane.

7. Procédé pour la production des composés de polyamide-polysiloxane selon l'une des revendications 1 à 5, qui comprend la réaction d'un composé de la formule 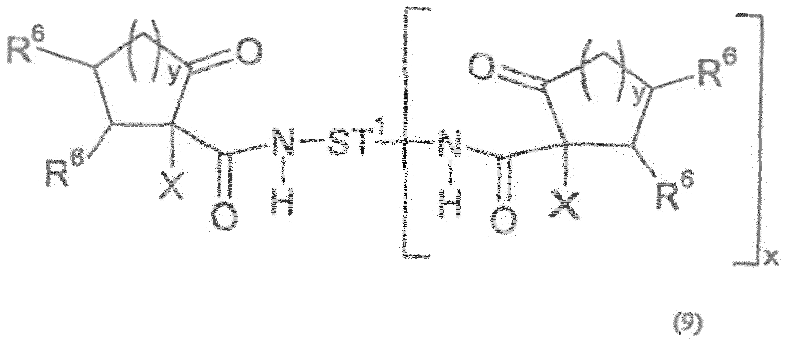 dans lequel x, y, X, R⁶, ST¹ sont tel que défini là-dessus,
avec un composé de la formule
HY²-ST³-NR⁵₂,
dans lequel ST³, Y² et R⁵ sont tel que défini là-dessus,
et un composé de la formule
Q-ST^{4v}-Q,
dans lequel
Q est un résidu capable de provoquer l'alkylation d'une groupe amino, et ST^{4V} ensemble avec la portion de la molécule provenant de Q après la réaction de quaternisation forme le résidu ST⁴,
à condition que au moins l'un des résidus ST¹, ST³ et/ou ST⁴ comprenne un résidu de polyorganosiloxane.

8. Utilisation du composé de polyamide-polysiloxane selon l'une des revendications 1 à 5 pour la production des revêtements, des agents pour la modification de surface, des elastomères, des duromères, des adhésives, des amorces pour des surfaces métalliques et plastiques, des additifs polymères, des additifs de lessive, des agents rhéologiques, des agents cosmétiques, des agents de modification de fibres.

9. Formulations de lessive, formulations cosmétiques, formulations pour le traitement de fibres contenant au moins un composé de polyamide-polysiloxane selon l'une des revendications 1 à 5.

10. Composition réactive contant au moins un composé de la formule 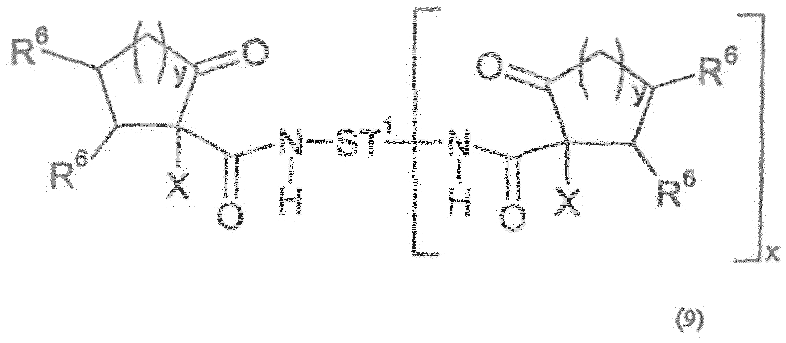 ainsi que un composé de la formule
H-Y-ST²-Y-H,
dans lequel x, y, X, Y, R⁶, ST¹, ST² sont tel que défini là-dessus,
à condition que au moins l'un des résidus ST¹ et/ou ST² comprend un résidu de polysiloxane.

11. Composition réactive contant au moins un composé de la formule 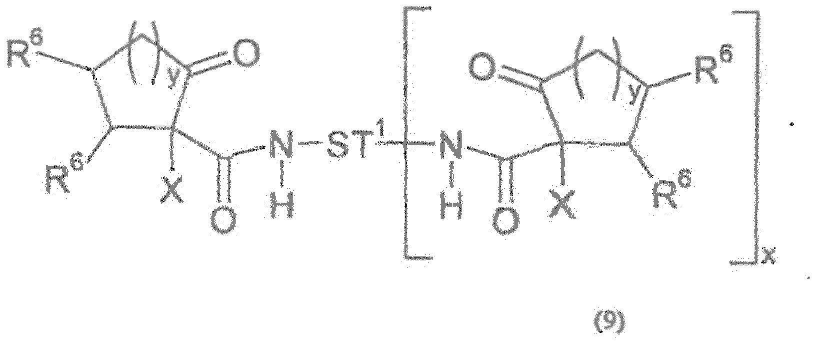 dans lequel x, y, X, R⁶, ST¹ sont tel que défini là-dessus,
au moins un composé de la formule
HY-ST³-NR⁵₂,
dans lequel Y, ST³ et R⁵ sont tel que défini là-dessus, et
au moins un composé de la formule
Q-ST^{4V}-Q,
dans lequel Q est un résidu capable de provoquer l'alkylation d'un groupe amino, et ST⁴ ensemble avec la portion de molécule issue de Q après la réaction de quatérnisation forme le résidu ST⁴,
à condition que au moins l'un des résidus ST¹, ST³ et/ou ST⁴ comprend un résidu de polyorganosiloxane.

12. Composition durcie obténable par le durcissement de la composition selon l'une des revendications 10 ou 11.

13. Composé de la formule 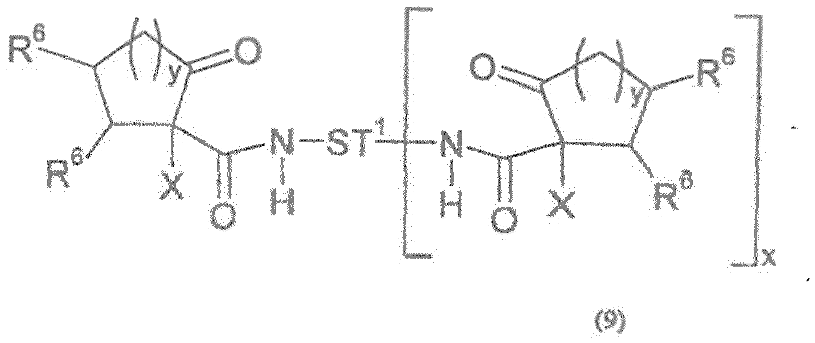 dans lequel x, y, X, R⁶, ST¹ sont tel que défini là-dessus, à condition que le résidu ST¹ comprend au moins un résidu de polysiloxane.
